(19) Europäisches Patentamt / European Patent Office / Office européen des brevets

(11) **EP 4 372 641 A1**

(12) **EUROPEAN PATENT APPLICATION**

(43) Date of publication:
**22.05.2024 Bulletin 2024/21**

(21) Application number: **22214141.8**

(22) Date of filing: **16.12.2022**

(51) International Patent Classification (IPC):
**G06Q 10/063** (2023.01)    **G06Q 50/06** (2024.01)
**G06Q 50/30** (2012.01)

(52) Cooperative Patent Classification (CPC):
**G06Q 10/063; G06Q 50/06; G06Q 50/40**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **17.11.2022 US 202263426271 P**

(71) Applicant: **Hitachi Energy Ltd**
**8050 Zürich (CH)**

(72) Inventors:
• **KNEZOVIC, Katarina**
**8006 Zürich (CH)**
• **GIUNTOLI, Marco**
**64521 Groß-Gerau (DE)**
• **HILLIARD, Antony Foster**
**Montréal, Québec H2E 1W4 (CA)**

(74) Representative: **Vossius & Partner**
**Patentanwälte Rechtsanwälte mbB**
**Siebertstraße 3**
**81675 München (DE)**

(54) **SYSTEM AND METHOD TO CONTROL ELECTRIC VEHICLE FLEET CHARGING OR MICROGRID OPERATION CONSIDERING A HEURISTIC APPROACH TO EXTEND BATTERY LIFE**

(57)    Conventional optimization models for electric vehicle (EV) charging do not sufficiently account for battery wear. Accordingly, disclosed embodiments utilize a heuristic approach to penalize optimization solutions for deviations of electric vehicles or other flexible loads (e.g., microgrid batteries) from state-of-health (SoH) parameters. For example, the SoH parameters may encourage the optimization model to quickly bring and maintain states of charge for the batteries of the flexible loads within an ideal state-of-charge (SoC) range. This approach biases the optimization model towards a solution that reduces the occurrence of such deviations from SoH parameters, thereby extending the lifetime of the batteries.

FIG. 1

**Description**

**BACKGROUND**

Field of the Invention

The embodiments described herein are generally directed to energy management, and, more particularly, to charging control in a power infrastructure site, such as a power depot or microgrid, using a heuristic approach to extend battery life.

Description of the Related Art

Many fleets of commercial and public-transit vehicles are switching to electric vehicles (EVs). Electric vehicles generally comprise batteries, which can be costly to replace. Battery aging limits the effective lifetime of an electric vehicle. As a battery ages with use (i.e., cycle aging) and time (i.e., calendar aging), its energy storage capacity and energy supply capability degrade, until the battery no longer satisfies its service requirements.

Batteries have different chemistries and manufacturing types, and an EV depot may have to charge a variety of different types of electric vehicles. This makes it difficult to automatically determine which electric vehicle requires what treatment to maximize its battery and service life. Battery health, including thermal control of the battery's temperature, is typically managed by the electric vehicle's on-board battery management system (BMS). However, battery management systems do not expose much data to charging stations. Thus, such information cannot be easily or cheaply incorporated into charging control. In addition, battery degradation is often represented as a state of health (SoH), which can be defined using key performance indicators, such as changes in capacity, internal battery resistance, round-trip efficiency, or the like.

Because battery health is a long-term phenomenon (e.g., on the horizon of years), subject to technical and business factors, it should be weighed against short-term and medium-term operational criteria. Thus, the inventors have recognized that any heuristic for battery aging should account for these operational criteria, and that an optimization formulation could determine the best trade-off between battery wear and other objectives. European Patent No. 3 702 201 B1, U.S. Patent No. 8,975,866 B2, and U.S. Patent No. 8,762,189 B2 each describe various heuristic methods that consider state of charge or battery wear. The present disclosure addresses one or more of the problems in these methods discovered by the inventors.

**SUMMARY**

Accordingly, systems, methods, and non-transitory computer-readable media are disclosed for charging control in a power infrastructure site, such as a power depot or microgrid, using a heuristic approach to extend battery life. An objective of certain embodiments is to reduce battery wear by incorporating SoH parameters into an optimization model for operation of one or more power infrastructure sites. A further objective of certain embodiments, is to define these SoH parameters at a granular level, such as for specific flexible loads (e.g., electric vehicles with batteries, individual batteries in a microgrid, etc.) or types of flexible loads or batteries, to provide greater flexibility and accuracy.

In an embodiment, a method comprises using at least one hardware processor to: generate an optimization model from a model of at least one power infrastructure site, wherein the optimization model outputs a target value based on one or more variables, including states of charge of energy stores in flexible loads in the at least one power infrastructure site and an input that comprises a schedule for the flexible loads, and wherein the optimization model penalizes states of charge that deviate from state-of-health (SoH) parameters associated with the energy stores in the flexible loads; solve the optimization model to determine values for the one or more variables that optimize the target value; and initiate control of one or more physical components in the at least one power infrastructure site based on the determined values for the one or more variables.

The at least one power infrastructure site may comprise a depot, wherein the flexible loads comprise electric vehicles, and wherein the one or more physical components comprise one or more charging stations configured to electrically connect to the electric vehicles to one or both of charge the electric vehicles or discharge the electric vehicles. The determined values for the one or more variables may associate each of the electric vehicles with one or both of a time period or power flow rate for charging or discharging at one of the one or more charging stations in the at least one power infrastructure site.

The method may further comprise receiving vehicle information for the electric vehicles from at least one external system via at least one network, wherein the input to the optimization model is derived from at least the vehicle information. The vehicle information may comprise one or more of planned schedules for the electric vehicles, routes of the electric vehicles, arrival times of the electric vehicles at the at least one power infrastructure site, or states of charge of the electric vehicles.

The target value may include at least an energy cost, wherein optimizing the target value comprises minimizing the target value.

Initiating control of one or more physical components may comprise controlling setpoints of the one or more physical components according to the determined values for the one or more variables. The one or more physical components may comprise non-intermittent distributed energy resources.

Initiating control may comprise communicating with a control system for the at least one power infrastructure site via at least one network.

The SoH parameters may comprise state-of-charge (SoC) ranges. At least one of the SoC ranges may be defined by a minimum SoC threshold that is greater than an empty charge and a maximum SoC threshold that is less than a full charge.

The optimization model may comprise an objective function in which penalties, to states of charge that deviate from the SoH parameters, increase as the deviations increase. The objective function may be linear.

The optimization model may penalize one or more additional characteristics of charging associated with the energy stores in the flexible loads.

At least one of the energy stores in the flexible loads may be associated with a different SoH parameter than a different one of the energy stores in the flexible loads. At least one type of the energy stores in the flexible loads may be associated with a different SoH parameter than a different type of the energy stores in the flexible loads. Each of the energy stores may be associated with an energy-store-specific SoH parameter that is independent from the SoH parameter associated with others of the energy stores.

The optimization model may comprise a stochastic algorithm.

It should be understood that any of the features in the methods above may be implemented individually or with any subset of the other features in any combination. Thus, to the extent that the appended claims would suggest particular dependencies between features, disclosed embodiments are not limited to these particular dependencies. Rather, any of the features described herein may be combined with any other feature described herein, or implemented without any one or more other features described herein, in any combination of features whatsoever. In addition, any of the methods, described above and elsewhere herein, may be embodied, individually or in any combination, in executable software modules of a processor-based system, such as a server, and/or in executable instructions stored in a non-transitory computer-readable medium.

## BRIEF DESCRIPTION OF THE DRAWINGS

The details of the present invention, both as to its structure and operation, may be gleaned in part by study of the accompanying drawings, in which like reference numerals refer to like parts, and in which:

FIG. 1 illustrates an example infrastructure, in which one or more of the processes described herein, may be implemented, according to an embodiment;
FIG. 2 illustrates an example processing system, by which one or more of the processes described herein, may be executed, according to an embodiment;
FIG. 3 illustrates an example distribution network of a power infrastructure site, according to an embodiment;
FIG. 4 illustrates example data flows between various components of an optimization infrastructure, according to an embodiment;
FIG. 5 illustrates an example process for charging control in a power infrastructure site using a heuristic approach to extend battery life, according to an embodiment;
FIGS. 6A-6C illustrate example penalty profiles for deviations from state-of-health parameters, according to alternative embodiments; and
FIG. 7 illustrates the impact of an objective function that penalizes states of charge outside of ideal SoC ranges, according to an experiment with an embodiment.

## DETAILED DESCRIPTION

In an embodiment, systems, methods, and non-transitory computer-readable media are disclosed for charging control in a power infrastructure site, such as a power depot or microgrid, using a heuristic approach to extend battery life. After reading this description, it will become apparent to one skilled in the art how to implement the invention in various alternative embodiments and alternative applications. However, although various embodiments of the present invention will be described herein, it is understood that these embodiments are presented by way of example and illustration only, and not limitation. As such, this detailed description of various embodiments should not be construed to limit the scope or breadth of the present invention as set forth in the appended claims.

The term "power infrastructure site" refers to any infrastructure with clearly defined electrical boundaries. Generally, a power infrastructure site will comprise an electrical distribution network with interconnected loads, and is capable of being independently controlled. For example, a power infrastructure site may be a power depot and/or microgrid comprising a plurality of infrastructure assets. However, a power infrastructure site could also consist of a single infrastructure asset. An infrastructure asset may comprise a power generator, energy storage system, load, and/or any other component of the power infrastructure site.

The term "power depot" refers to any power infrastructure site that comprises at least one charging station configured to be electrically connected to a flexible load to charge a battery of the flexible load and/or discharge the battery of the flexible load. It should be understood that a power depot may also comprise inflexible loads. As one example, a power depot may be an electric vehicle (EV) depot that provides private charging for a fleet of electric vehicles for a municipal mass transit system, business, utility provider, or other entity, public charging for personal electric vehicles, private charging for personal electric vehicles (e.g., at the residence of the owner of the personal electric vehicle), and/or the like.

The term "microgrid" refers to any power infrastructure site that comprises a local electric grid that is capable of operating independently from the rest of the electric grid. A microgrid may comprise a plurality of infrastructure assets (e.g., generator(s), energy storage system(s), load(s), and/or the like), connected through a local distribution network, under the same point of common coupling. The infrastructure assets of a microgrid will generally comprise at least some type of power generator or energy storage system, but may comprise any combination of infrastructure assets. It should be understood that a power depot and microgrid are not mutually exclusive, and that, in some instances, a power infrastructure site may comprise both a power depot and a microgrid.

The term "flexible load" refers to any load that has flexibility in at least one characteristic that can be represented by a variable in an optimization model. One such characteristic may be a location at which the flexible load is charged or discharged. A flexible load with flexibility in location can be charged or discharged at any of a plurality of locations in one or a plurality of power infrastructure sites. Another such characteristic may be the timing at which the flexible load is charged or discharged. A flexible load with flexibility in timing can be charged or discharged according to different timings in terms of start time, end time, time ranges, time durations, and/or the like. Another such characteristic may be the power flow rate at which the flexible load is charged or discharged. A flexible load with flexibility in power flow rate can be charged at any of a plurality of different power flow rates (e.g., at any power flow rate within a range of power flow rates). Another such characteristics may be the operational state of the flexible load. A flexible load with flexibility in operational state (e.g., water heater, air conditioning, compressor, etc.) can be transitioned to another state that reduces power consumption (e.g., low-power mode, turned off, discharge, etc.) to increase the amount of energy available to other loads and/or decrease the total amount of consumed energy. It should be understood that these are simply examples of characteristics, and that the flexible load may be flexible in terms of other characteristics, even if not specifically described herein. A flexible load may be flexible in terms of only one characteristic, all characteristics, or any subset of characteristics. In contrast, the term "inflexible load" refers to any load that is not flexible in any characteristic.

In a contemplated embodiment, the flexible load is an electric vehicle, and the power infrastructure site is an EV depot. Electric vehicles may be flexible at least with respect to their locations. In other words, because an electric vehicle is mobile, an electric vehicle can generally be charged at any of a plurality of available charging stations within any one of a plurality of EV depots. In particular, the electrical vehicle comprises an on-board battery that can be electrically connected to any of a plurality of available charging stations within the EV depot. Similar types of flexible loads include, without limitation, drones, robotic systems, mobile machines, mobile devices, power tools, and the like.

However, the disclosed approach is not limited to electric vehicles or other mobile loads. Rather, the disclosed approach may be applied to any load, whether mobile or stationary, as long as the load has one or more flexible characteristics that can be defined in terms of variable(s) in an optimization model. For example, a flexible load may simply consist of a stationary or mobile battery, or may be a system that consumes power without having any on-board battery to store power. A stationary flexible load will generally not have flexibility in location, but may have flexibility in terms of timing, power flow rate, operational state, and/or the like. For purposes of the present disclosure, it is generally assumed that a flexible load comprises or consists of an energy store. While the energy store will primarily be described herein as a battery, it should be understood that the energy store may comprise or consist of any other mechanism or component for storing energy, such as a supercapacitor, compressed gas, and/or the like.

A power infrastructure site may also comprise one or more flexible power generators. The term "flexible power generator" refers to any power generator which can be controlled to either increase and/or decrease the amount of power that is generated. Examples of flexible power generators include, without limitation, a diesel generator, a hydrogen fuel cell, distributed energy resources whose power output can be curtailed, and/or the like. Optimization of a power infrastructure site can optimize variables for both the flexible loads and the flexible power generators.

As used herein, the term "distribution network" refers to the interconnection of electrical components, within a power infrastructure site, that distributes power to the flexible loads. These electrical components may comprise one or more intermittent and/or non-intermittent distributed energy resources, including renewable energy resources (e.g., solar power generator, wind power generator, geothermal power generator, hydroelectric power generator, fuel cell, etc.) and/or non-renewable energy resources (e.g., diesel generator, natural gas generator, etc.), one or more battery energy storage systems (BESSs), and/or like. Additionally or alternatively, in the event that the power infrastructure site comprises a power depot, these electrical components may comprise charging stations. Despite the term "charging," the term "charging station" encompasses a station that is capable of discharging a load (e.g., drawing power out of an on-board battery of the load) in addition to charging the load (e.g., supplying power to an on-board battery of the load), as well as a station that is only capable of charging a load and a station that is only capable of discharging a load. The electrical components in the power infrastructure site can be thought of as "nodes" of the distribution network, and electrical connections between these electrical components can be thought of as "edges" connecting the nodes within the distribution network. The distribution network of a power infrastructure site may be connected to other distribution networks (e.g., during normal operation) or may be isolated (e.g., in the case of a microgrid during independent operation).

## 1. Example Infrastructure

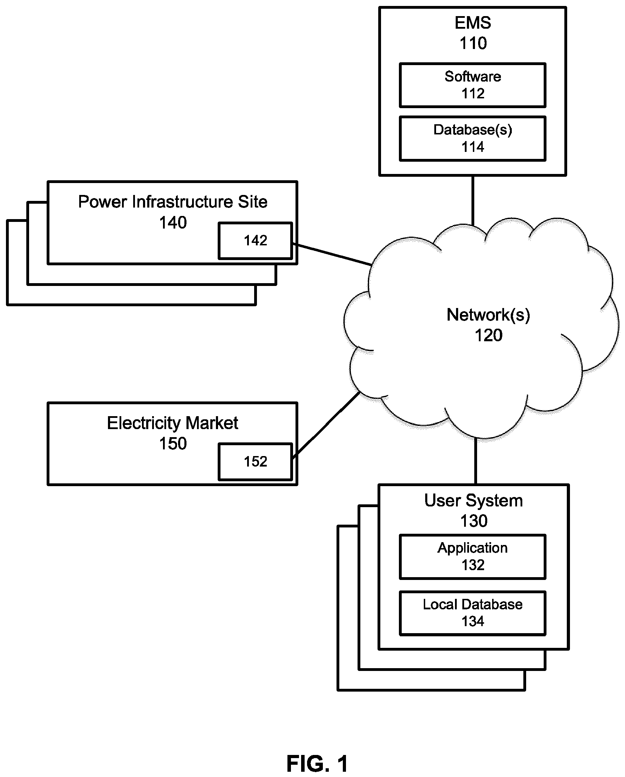

FIG. 1 illustrates an example infrastructure in which one or more of the disclosed processes may be implemented, according to an embodiment. The infrastructure may comprise an energy management system (EMS) 110 (e.g., comprising one or more servers) which hosts and/or executes one or more of the various functions, processes, methods, and/or software modules described herein. EMS 110 may comprise dedicated servers, or may instead be implemented in a computing cloud, in which the resources of one or more servers are dynamically and elastically allocated to multiple tenants based on demand. In either case, the servers may be collocated and/or geographically distributed. EMS 110 may also comprise or be communicatively connected to software 112 and/or one or more databases 114. In addition, EMS 110 may be communicatively connected to one or more user systems 130, power infrastructure sites 140, and/or electricity markets 150 via one or more networks 120.

Network(s) 120 may comprise the Internet, and EMS 110 may communicate with user system(s) 130, power infrastructure site(s) 140, and/or electricity market(s) 150 through the Internet using standard transmission protocols, such as HyperText Transfer Protocol (HTTP), HTTP Secure (HTTPS), File Transfer Protocol (FTP), FTP Secure (FTPS), Secure Shell FTP (SFTP), extensible Messaging and Presence Protocol (XMPP), Open Field Message Bus (OpenFMB), IEEE Smart Energy Profile Application Protocol (IEEE 2030.5), and the like, as well as proprietary protocols. While EMS 110 is illustrated as being connected to various systems through a single set of network(s) 120, it should be understood that EMS 110 may be connected to the various systems via different sets of one or more networks. For example, EMS 110 may be connected to a subset of user systems 130, power infrastructure sites 140, and/or electricity markets 150 via the Internet, but may be connected to one or more other user systems 130, power infrastructure sites 140, and/or electricity markets 150 via an intranet. Furthermore, while only a few user systems 130 and power infrastructure sites 140, one electricity market 150, one instance of software 112, and one set of database(s) 114 are illustrated, it should be understood that the infrastructure may comprise any number of user systems, power infrastructure sites, electricity markets, software instances, and databases.

User system(s) 130 may comprise any type or types of computing devices capable of wired and/or wireless communication, including without limitation, desktop computers, laptop computers, tablet computers, smart phones or other mobile phones, servers, game consoles, televisions, set-top boxes, electronic kiosks, point-of-sale terminals, embedded controllers, programmable logic controllers (PLCs), and/or the like. However, it is generally contemplated that user system(s) 130 would comprise personal computers, mobile devices, or workstations by which agents of operator(s) of power infrastructure sites(s) 140 can interact, as users, with EMS 110. These interactions may comprise inputting data (e.g., parameters for configuring one or more of the processes described herein) and/or receiving data (e.g., the outputs of one or more processes described herein) via a graphical user interface provided by EMS 110 or an intervening system between EMS 110 and user system(s) 130. The graphical user interface may comprise screens (e.g., webpages) that include a combination of content and elements, such as text, images, videos, animations, references (e.g., hyperlinks), frames, inputs (e.g., textboxes, text areas, checkboxes, radio buttons, drop-down menus, buttons, forms, etc.), scripts (e.g., JavaScript), and the like, including elements comprising or derived from data stored in one or more databases (e.g., database(s) 114).

EMS 110 may execute software 112, comprising one or more software modules that implement one or more of the disclosed processes. In addition, EMS 110 may comprise, be communicatively coupled with, or otherwise have access to one or more database(s) 114 that store the data input into and/or output from one or more of the disclosed processes. Any suitable database may be utilized, including without limitation MySQL™, Oracle™, IBM™, Microsoft SQL™, Access™, PostgreSQL™, and the like, including cloud-based databases, proprietary databases, and unstructured databases (e.g., MongoDB™).

EMS 110 may communicate with power infrastructure site(s) 140 and/or electricity market(s) 150 via an application programming interface (API). For example, EMS 110 may "push" data (i.e., transmit the data on its own initiative) to each power infrastructure site 140 via an API of a control system 142 of power infrastructure site 140. Control system 142 may be a Supervisory Control and Data Acquisition (SCADA) system. Alternatively or additionally, control system 142 of power infrastructure site 140 may "pull" data (i.e., initiate transmission of the data via a request) from EMS 110 via an API of EMS 110. Similarly, EMS 110 may push data to an electricity market interface 152 of electricity market 150 via an API of electricity market interface 152, and/or electricity market interface 152 may pull data from EMS 110 via an API of EMS 110.

2. Example Processing System

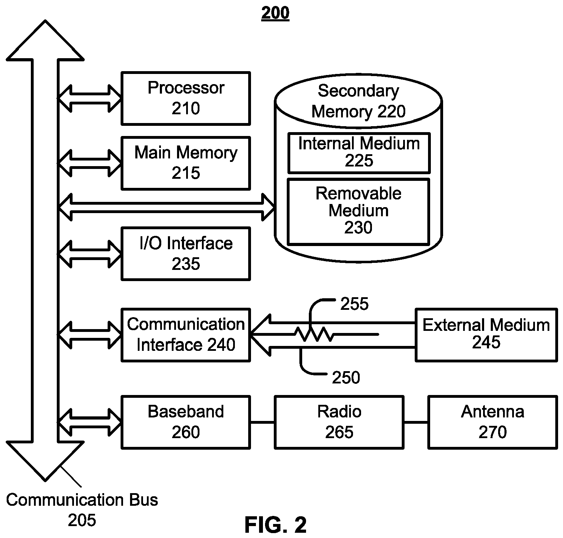

FIG. 2 is a block diagram illustrating an example wired or wireless system 200 that may be used in connection with various embodiments described herein. For example, system 200 may be used as or in conjunction with one or more of the functions, processes, or methods (e.g., to store and/or execute software 112) described herein, and may represent components of EMS 110, user system(s) 130, power infrastructure sites(s) 140, control system 142, electricity market interface 152, and/or other processing devices described herein. System 200 can be a server or any conventional personal computer, or any other processor-enabled device that is capable of wired or wireless data communication. Other computer systems and/or architectures may be also used, as will be clear to those skilled in the art.

System 200 preferably includes one or more processors 210. Processor(s) 210 may comprise a central processing unit (CPU). Additional processors may be provided, such as a graphics processing unit (GPU), an auxiliary processor to manage input/output, an auxiliary processor to perform floating-point mathematical operations, a special-purpose microprocessor having an architecture suitable for fast execution of signal-processing algorithms (e.g., digital-signal processor), a slave processor subordinate to the main processing system (e.g., back-end processor), an additional microprocessor or controller for dual or multiple processor systems, and/or a coprocessor. Such auxiliary processors may be discrete processors or may be integrated with processor 210. Examples of processors which may be used with system 200 include, without limitation, any of the processors (e.g., Pentium™, Core i7™, Xeon™, etc.) available from Intel Corporation of Santa Clara, California, any of the processors available from Advanced Micro Devices, Incorporated (AMD) of Santa Clara, California, any of the processors (e.g., A series, M series, etc.) available from Apple Inc. of Cupertino, any of the processors (e.g., Exynos™) available from Samsung Electronics Co., Ltd., of Seoul, South Korea, any of the processors available from NXP Semiconductors N.V. of Eindhoven, Netherlands, and/or the like.

Processor 210 is preferably connected to a communication bus 205. Communication bus 205 may include a data channel for facilitating information transfer between storage and other peripheral components of system 200. Furthermore, communication bus 205 may provide a set of signals used for communication with processor 210, including a data bus, address bus, and/or control bus (not shown). Communication bus 205 may comprise any standard or non-standard bus architecture such as, for example, bus architectures compliant with industry standard architecture (ISA), extended industry standard architecture (EISA), Micro Channel Architecture (MCA), peripheral component interconnect (PCI) local bus, standards promulgated by the Institute of Electrical and Electronics Engineers (IEEE) including IEEE 488 general-purpose interface bus (GPIB), IEEE 696/S-100, and/or the like.

System 200 preferably includes a main memory 215 and may also include a secondary memory 220. Main memory 215 provides storage of instructions and data for programs executing on processor 210, such as one or more of the functions and/or modules discussed herein (e.g., software 112). It should be understood that programs stored in the memory and executed by processor 210 may be written and/or compiled according to any suitable language, including without limitation C/C++, Java, JavaScript, Perl, Visual Basic, .NET, and the like. Main memory 215 is typically semiconductor-based memory such as dynamic random access memory (DRAM) and/or static random access memory (SRAM). Other semiconductor-based memory types include, for example, synchronous dynamic random access memory (SDRAM), Rambus dynamic random access memory (RDRAM), ferroelectric random access memory (FRAM), and the like, including read only memory (ROM).

Secondary memory 220 may optionally include an internal medium 225 and/or a removable medium 230. Removable medium 230 is read from and/or written to in any well-known manner. Removable storage medium 230 may be, for example, a magnetic tape drive, a compact disc (CD) drive, a digital versatile disc (DVD) drive, other optical drive, a flash memory drive, and/or the like. Secondary memory 220 is a non-transitory computer-readable medium having computer-executable code (e.g., software 112) and/or other data stored thereon. The computer software or data stored on secondary memory 220 is read into main memory 215 for execution by processor 210.

In alternative embodiments, secondary memory 220 may include other similar means for allowing computer programs or other data or instructions to be loaded into system 200. Such means may include, for example, a communication interface 240, which allows software and data to be transferred from external storage medium 245 to system 200. Examples of external storage medium 245 may include an external hard disk drive, an external optical drive, an external magneto-optical drive, and/or the like. Other examples of secondary memory 220 may include semiconductor-based memory, such as programmable read-only memory (PROM), erasable programmable read-only memory (EPROM), electrically erasable read-only memory (EEPROM), and flash memory (block-oriented memory similar to EEPROM).

As mentioned above, system 200 may include a communication interface 240. Communication interface 240 allows software and data to be transferred between system 200 and external devices (e.g. printers), networks, or other information sources. For example, computer software or executable code may be transferred to system 200 from a network server (e.g., platform 110) via communication interface 240. Examples of communication interface 240 include a built-in network adapter, network interface card (NIC), Personal Computer Memory Card International Association (PCMCIA) network card, card bus network adapter, wireless network adapter, Universal Serial Bus (USB) network adapter, modem, a wireless data card, a communications port, an infrared interface, an IEEE 1394 fire-wire, and any other device capable of interfacing system 200 with a network (e.g., network(s) 120) or another computing device. Communication interface 240 preferably implements industry-promulgated protocol standards, such as Ethernet IEEE 802 standards, Fiber Channel, digital subscriber line (DSL), asynchronous digital subscriber line (ADSL), frame relay, asynchronous transfer mode (ATM), integrated digital services network (ISDN), personal communications services (PCS), transmission control protocol/Internet protocol (TCP/IP), serial line Internet protocol/point to point protocol (SLIP/PPP), and so on, but may also implement customized or non-standard interface protocols as well.

Software and data transferred via communication interface 240 are generally in the form of electrical communication signals 255. These signals 255 may be provided to communication interface 240 via a communication channel 250. In an embodiment, communication channel 250 may be a wired or wireless network (e.g., network(s) 120), or any variety of other communication links. Communication channel 250 carries signals 255 and can be implemented using a variety of wired or wireless communication means including wire or cable, fiber optics, conventional phone line, cellular phone link, wireless data communication link, radio frequency ("RF") link, or infrared link, just to name a few.

Computer-executable code (e.g., computer programs, such as software 112) is stored in main memory 215 and/or secondary memory 220. Computer programs can also be received via communication interface 240 and stored in main memory 215 and/or secondary memory 220. Such computer programs, when executed, enable system 200 to perform the various functions of the disclosed embodiments as described elsewhere herein.

In this description, the term "computer-readable medium" is used to refer to any non-transitory computer-readable storage media used to provide computer-executable code and/or other data to or within system 200. Examples of such media include main memory 215, secondary memory 220 (including internal memory 225 and/or removable medium 230), external storage medium 245, and any peripheral device communicatively coupled with communication interface 240 (including a network information server or other network device). These non-transitory computer-readable media are means for providing executable code, programming instructions, software, and/or other data to system 200.

In an embodiment that is implemented using software, the software may be stored on a computer-readable medium and loaded into system 200 by way of removable medium 230, I/O interface 235, or communication interface 240. In such an embodiment, the software is loaded into system 200 in the form of electrical communication signals 255. The software, when executed by processor 210, preferably causes processor 210 to perform one or more of the processes and functions described elsewhere herein.

In an embodiment, I/O interface 235 provides an interface between one or more components of system 200 and one or more input and/or output devices. Example input devices include, without limitation, sensors, keyboards, touch screens or other touch-sensitive devices, cameras, biometric sensing devices, computer mice, trackballs, pen-based pointing devices, and/or the like. Examples of output devices include, without limitation, other processing devices, cathode ray tubes (CRTs), plasma displays, light-emitting diode (LED) displays, liquid crystal displays (LCDs), printers, vacuum fluorescent displays (VFDs), surface-conduction electron-emitter displays (SEDs), field emission displays (FEDs), and/or the like. In some cases, an input and output device may be combined, such as in the case of a touch panel display (e.g., in a smartphone, tablet, or other mobile device).

System 200 may also include optional wireless communication components that facilitate wireless communication over a voice network and/or a data network (e.g., in the case of user system 130 that is a smart phone or other mobile device). The wireless communication components comprise an antenna system 270, a radio system 265, and a baseband system 260. In system 200, radio frequency (RF) signals are transmitted and received over the air by antenna system 270 under the management of radio system 265.

In an embodiment, antenna system 270 may comprise one or more antennae and one or more multiplexors (not shown) that perform a switching function to provide antenna system 270 with transmit and receive signal paths. In the receive path, received RF signals can be coupled from a multiplexor to a low noise amplifier (not shown) that amplifies the received RF signal and sends the amplified signal to radio system 265.

In an alternative embodiment, radio system 265 may comprise one or more radios that are configured to communicate over various frequencies. In an embodiment, radio system 265 may combine a demodulator (not shown) and modulator (not shown) in one integrated circuit (IC). The demodulator and modulator can also be separate components. In the incoming path, the demodulator strips away the RF carrier signal leaving a baseband receive audio signal, which is sent from radio system 265 to baseband system 260.

If the received signal contains audio information (e.g., a user system 130 comprising a smart phone or other mobile device), then baseband system 260 decodes the signal and converts it to an analog signal. Then the signal is amplified and sent to a speaker. Baseband system 260 also receives analog audio signals from a microphone. These analog audio signals are converted to digital signals and encoded by baseband system 260. Baseband system 260 also encodes the digital signals for transmission and generates a baseband transmit audio signal that is routed to the modulator portion of radio system 265. The modulator mixes the baseband transmit audio signal with an RF carrier signal, generating an RF transmit signal that is routed to antenna system 270 and may pass through a power amplifier (not shown). The power amplifier amplifies the RF transmit signal and routes it to antenna system 270, where the signal is switched to the antenna port for transmission.

Baseband system 260 is also communicatively coupled with processor(s) 210. Processor(s) 210 may have access to data storage areas 215 and 220. Processor(s) 210 are preferably configured to execute instructions (i.e., computer programs, such as the disclosed software) that can be stored in main memory 215 or secondary memory 220. Computer programs can also be received from baseband processor 260 and stored in main memory 210 or in secondary memory 220, or executed upon receipt. Such computer programs, when executed, enable system 200 to perform the various functions of the disclosed embodiments.

## 3. Example Power Infrastructure Site

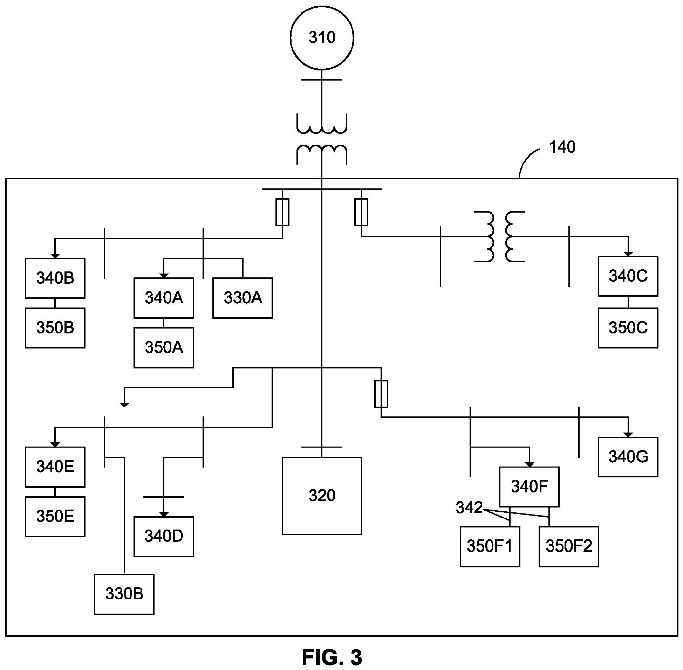

FIG. 3 illustrates a one-line diagram of an example distribution network of an example power infrastructure sites 140, according to an embodiment. As one non-limiting example, power infrastructure site 140 may be an EV depot for charging electric vehicles as flexible loads. Power infrastructure site 140 is connected to a power grid 310, from which electricity may be purchased (e.g., from electricity market 150). The purchase price of electricity may vary throughout each day (e.g., higher during the day than at night) and across days (e.g., higher on summer days than winter days), according to a time-of-use (ToU) rate. The ToU rate may assign peak rates, partial-peak rates, and off-peak rates to various time periods (e.g., each hourly interval in a day), representing the price of electricity during those time periods.

The distribution network of power infrastructure site 140 may comprise nodes representing one or a plurality of distributed energy resources in power infrastructure site 140, including, for example, one or a plurality of battery energy storage systems 320 and/or one or a plurality of power generators 330, illustrated as power generators 330A and 330B. Power generator(s) 330 may comprise renewable energy resources (e.g., solar power generator, wind power generator, geothermal power generator, hydroelectric power generator, fuel cell, etc.) and/or non-renewable energy resources (e.g., diesel generator, natural gas generator, etc.). For example, power generator 330A may be a solar power generator comprising a plurality of photovoltaic cells that convert sunlight into electricity, and power generator 330B may be a diesel generator that burns diesel gasoline to produce electricity.

The distribution network of power infrastructure site 140 may also comprise nodes representing one or a plurality of charging stations 340 in power infrastructure site 140. In the illustrated example, power infrastructure site 140 is a power depot comprising a plurality of charging stations 340A, 340B, 340C, 340D, 340E, 340F, and 340G. Each charging station 340 may comprise one or a plurality of chargers 342. For example, charging station 340F is illustrated with two chargers 342. Each charger 342 is configured to be electrically connected to a flexible load 350, so as to supply electricity to one or more energy stores (e.g. batteries) of the flexible load 350 and/or discharge electricity from one or more energy stores of the flexible load 350. In the case of supplying or charging a battery of a flexible load 350, electricity may flow from a power generator 330 and/or grid 310, through the distribution network, to the battery of the flexible load 350. Conversely, in the case of discharging a battery of a flexible load 350, electricity may flow from the battery of the flexible load 350 into the distribution network and into a battery energy storage system 320, grid 310, and/or another flexible load 350. At any given time, some chargers 342 may be connected to a flexible load 350, illustrated as flexible loads 350A, 350B, 350C, 350E, 350F1, and 350F2, whereas other chargers 342 may be unconnected to a flexible load 350 and available to receive an incoming flexible load 350.

In an embodiment, two or more power infrastructure sites 340 may be connected via a transmission network (not shown) or within the same distribution network. In this case, power can be transmitted between two power infrastructure sites 340. For example, a first power infrastructure site 140 may transmit power from one or more of its infrastructure assets (e.g., battery energy storage system(s) 320, power generator(s) 330, and/or flexible load(s) 350), over the network, to a second power infrastructure site 140, to charge one or more infrastructure assets (e.g., battery energy storage system(s) 320 and/or flexible load(s) 350) of the second power infrastructure site 140.

One or more charging stations 340 or individual chargers 342 may be configured to start charging a flexible load 350 (e.g., at a settable power flow rate), terminate charging of a flexible load 350, start discharging a flexible load 350 (e.g., at a settable power flow rate), terminate discharging of a flexible load 350, and/or the like, under the control of control system 142, EMS 110, and/or another controller. For example, a charging station 340 and/or charger 342 may comprise a processing system 200 that receives commands from a controller (e.g., control system 142 and/or EMS 110) via communication interface 240, processes the commands using processor 210 and main memory 215, and controls an actuator (e.g., one or more switches) to start or terminate charging or discharging according to the processed commands.

It should be understood that power infrastructure site 140 may comprise other loads, in addition to flexible loads 350. For example, power infrastructure site 140 may comprise auxiliary loads for operating various functions of power infrastructure site 140. However, even these auxiliary loads may be considered flexible loads 350 if they are flexible in at least one characteristic (e.g., operational state). It should also be understood that each battery energy storage system 320 can function as both a power source (i.e., when discharging) and a load (i.e., when charging), and can also be considered a flexible load 350.

Parameters (e.g., voltage, current, setpoint, etc.) of each node within the distribution network of power infrastructure site 140 may be monitored by EMS 110 and/or simulated by EMS 110 (e.g., during a load flow analysis). Thus, EMS 110 may monitor and/or simulate parameters of nodes within the distribution network, and control one or more physical components of power infrastructure site 140, such as charging station(s) 340, charger(s) 342, power generator(s) 330, battery energy storage system(s) 320, and/or the like, based on those parameters. This control may be performed periodically or in real time, and may be performed directly or indirectly (e.g., via control system 142).

The illustrated power infrastructure site 140 comprises a certain number of charging stations 340. However, it should be understood that a power infrastructure site 140 may comprise any number of charging stations 340, including only a single charging station 340. In addition, each charging station 340 may comprise any number of chargers 342, including only a single charger 342. In the simplest form, a power infrastructure site 140 could consist of a single charging station 340 consisting of a single charger 342, such as a charging station 340 in a residence, public parking spot, or the like. In addition, although all flexible loads 350 are illustrated as connected to a charging station, one or more flexible loads 350 may be connected to the distribution network without any intervening charging station 340.

A single EMS 110 may manage a single power infrastructure site 140 or a plurality of power infrastructure sites 140. In the case that EMS 110 manages a plurality of power infrastructure sites 140, the managed power infrastructure sites 140 may be identical to, similar to, or different than each other. For example, a homogeneous mixture of power infrastructure sites 140 may consist of a plurality of power depots for one or a plurality of fleets of electric vehicles. In contrast, a heterogeneous mixture of power infrastructure sites 140 may comprise a mix of power depot(s), residential charging station(s) 340, public charging station(s) 340, microgrid(s), and/or the like.


4. Example Data Flow

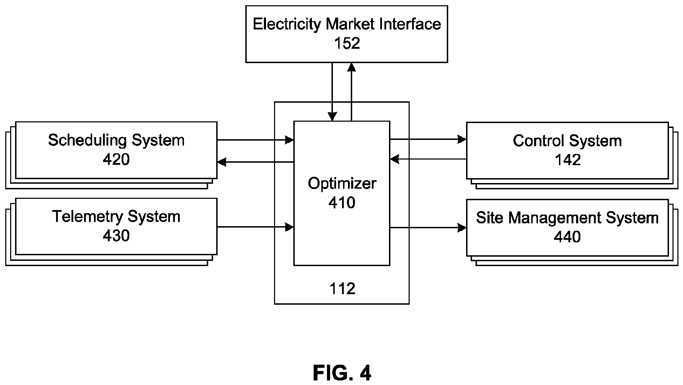

FIG. 4 illustrates example data flows between various components of an optimization infrastructure, according to an embodiment. Software 112, hosted on platform 110, may implement an optimizer 410. Optimizer 410 may generate an optimization model that outputs a target value, based on one or more variables and an input that comprises a schedule for one or more flexible loads 350 in one or more power infrastructure sites 140. The optimization model represents a concrete software-based implementation of an optimization problem. Optimizer 410 may solve the optimization model to determine values for the one or more variables that optimize the target value, subject to zero, one, or a plurality of constraints (e.g., inequality and/or equality constraints representing limitations on physical and/or technological capabilities, flexibility of loads and/or power generators, etc.). This optimization may comprise minimizing the target value (e.g., if the target value represents a cost) or maximizing the target value (e.g., if the target value represents a performance metric). The determined values of the variable(s) may represent an operating configuration (e.g., setpoints, schedules, etc.) of one or more power infrastructure sites 140 over a time period. Optimizer 410 may also initiate control of one or more physical components in one or more power infrastructure sites 140 based on the determined values for the one or more variables.

Optimizer 410 may update and solve the optimization model periodically, based on real-time or updated data. For example, the optimizer may update and solve the optimization model for operation of power infrastructure site(s) 140 in a sliding time window, representing an optimization period. The sliding time window continually or continuously advances to encompass the next time period for which operation of power infrastructure site(s) 140 is to be optimized. It should be understood that the start of the sliding time window may be the current time or some future time (e.g., 1 minute, 5 minutes, 10 minutes, 15 minutes, 30 minutes, 1 hour, 24 hours, etc., in the future), such that optimization is performed in advance of a future time period, encompassed by the sliding time window, for which the optimization is being performed. In an embodiment, the sliding time window may advance according to a time step (e.g., every 15 minutes), and utilize the most recent data available within a time range (e.g., a time range extending into the past that is equal in size to the time step). The size of the sliding time window may be any suitable duration (e.g., 15 minutes, 30 minutes, 1 hour, 24 hours, etc.).

Optimizer 410 may collect the data that it utilizes for optimization (e.g., as the input to the optimization model) from one or more scheduling systems 420, one or more telemetry systems 430, one or more control systems 142 of one or more power infrastructure sites 140, and/or one or more electricity market interfaces 152 of one or more electricity markets 150. It should be understood that these are simply examples of data flows, and that optimizer 410 may collect data from other systems (e.g., potentially including site management system(s) 440). For example, optimizer 410 may receive solutions from other optimizers, which may be incorporated into the input to the optimization model. In this case, optimizer 410 can focus on one aspect of an overall optimization, such that it does not have to integrate every detail of optimization into the optimization model.

In an embodiment, optimizer 410 may merge the collected data for a plurality of power infrastructure sites 140 into a single virtual site model, and perform a single holistic optimization of the virtual site model, to optimize operation of the plurality of power infrastructure sites 140 as a single unit. This virtual site model may represent a multi-tenant charging system-of-systems that aggregates a plurality of power infrastructure sites 140 (e.g., EV depots) for a plurality of tenants (e.g., EV fleet operators).

Optimizer 410 may output data to one or more scheduling systems 420, one or more control systems 142 of one or more power infrastructure sites 140, one or more site management systems 440, and/or one or more electricity market interfaces 152 of one or more electricity markets 150. It should be understood that these are simply examples of data flows, and that optimizer 410 may output data to other systems (e.g., potentially including telemetry system(s) 430). For example, optimizer 410 may output its solution or other data to one or more other optimizers, which may each incorporate this data into an input to its own optimization model. In this case, optimizer 410 can focus on one aspect of an overall optimization, such that it does not have to integrate every detail of optimization into the optimization model.

Scheduling system(s) 420, telemetry system(s) 430, and/or site management system(s) 440 may be hosted on EMS 110 or may be external to EMS 110. In either case, when collecting data, optimizer 410 may receive the data by either pulling the data from the respective system via an API of the respective system, or by the data being pushed by the respective system to optimizer 410 via an API of optimizer 410. Similarly, optimizer 410 may output data by either pushing the data to the respective system via an API of the respective system, or by the data being pulled by the respective system via an API of optimizer 410.

Each scheduling system 420 may manage the time tables and routing of flexible loads 350 (e.g., a fleet of electric vehicles). Optimizer 410 may receive schedule information from each scheduling system 420. The schedule information, provided by scheduling system 420, may comprise planned schedules for flexible loads 350. For example, the planned schedules may comprise, for each flexible load 350, a scheduled arrival time at which the flexible load 350 is expected to arrive at a power infrastructure site 140, a scheduled departure time at which the flexible load 350 is expected to depart from power infrastructure site 140, an auxiliary-task schedule defining a time period in which the flexible load 350 is expected to perform or undergo auxiliary tasks (e.g., pre-conditioning the cabin and/or battery of an electric vehicle, undergoing cleaning, maintenance, or repairs, etc.), a power flow schedule defining a power flow rate or profile for charging or discharging the flexible load 350, a priority of the flexible load 350 relative to other flexible loads 350 (e.g., indicating the relative cost of a delay in charging the flexible load 350), a preferred power infrastructure site 140 to be assigned to the flexible load 350, and/or the like. In addition, where flexible loads 350 have routes, the schedule information may comprise, for each flexible load 350, the route assigned to the flexible load 350.

After solving the optimization model, optimizer 410 may output data, associated with a scheduling system 420, to that scheduling system 420 or an intervening system. For example, in the event that optimizer 410 performs optimization for a plurality of power infrastructure sites 140, optimizer 410 may output a ranked list of power infrastructure sites 140, ordered, for instance, from the power infrastructure site 140 with the most capacity to the power infrastructure site 140 with the least capacity. Such information may be used by scheduling system 420 or an intervening system to update route assignments for flexible loads 350 (e.g., by re-routing one or more flexible loads 350 from a power infrastructure 140 with less capacity to a power infrastructure site 140 with greater capacity). Additionally or alternatively, optimizer 410 may output a ranked list of flexible loads 350, ordered, for instance, from the flexible load 350 that will be charged to an acceptable state of charge (SoC) first to the flexible load 350 that will be charged to an acceptable state of charge last (e.g., reflecting which electric vehicle can be readied first or unplugged the longest). As another example, optimizer 410 or an intervening system could provide recommendations to improve scheduling and/or provide data from which such recommendations may be derived. For instance, if flexible loads 350 are electric vehicles, such data may identify an electric vehicle that is frequently late, so that the electric vehicle's route can be changed (e.g., assigned to another electric vehicle, split with another electric vehicle, etc.). More generally, scheduling system 420 or an intervening system may analyze the data, provided by optimizer 410, to identify inefficiencies (e.g., bottlenecks, electric vehicles whose schedules require severely fast charging, etc.) in the schedule of flexible loads 350 and/or inaccurate parameters (e.g., actual energy consumed by pre-conditioning, etc.), and update the schedule of flexible loads 350 (e.g., re-optimize EV route assignments) to eliminate or mitigate those inefficiencies and/or reflect more accurate parameters.

Each telemetry system 430 may collect telemetric information for one or more flexible loads 350. A telemetry system 430 may be on board each flexible load 350, and transmit real-time telemetric information to optimizer 410. For example, in the event that flexible load 350 is an electric vehicle, telemetry system 430 may be embedded (e.g., as software or hardware) within an electronic control unit (ECU) of the electric vehicle and communicate over a wireless communication network (e.g., cellular communication network). Alternatively, telemetry system 430 may be external to flexible loads 350. In this case, telemetry system 430 may collect real-time telemetric information for a plurality of flexible loads 350, and forward or relay the collected telemetric information to optimizer 410 in real time. It should be understood that, as used herein, the terms "real-time" or "real time" contemplate, not only events which occur simultaneously, but

EP 4 372 641 A1

also events which are separated by delays resulting from ordinary latencies in processing, communications, and/or the like, and/or resulting from the use of time steps (e.g., with respect to a sliding time window for optimization).

Optimizer 410 may receive the telemetric information from each telemetry system 430. The telemetric information, provided by telemetry system 430, may comprise one or more parameters for each flexible load 350 for which the transmitting telemetry system 430 collects data. For each flexible load 350, these parameter(s) may comprise the estimated arrival time of the flexible load 350 at the scheduled power infrastructure site 140, the current state of charge of the energy store (e.g., battery) on board the flexible load 350, and/or the like. It should be understood that these parameters may change over time, and that updated telemetric information, reflecting any changes, may be received periodically by optimizer 410 (e.g., and used as input to the optimization model for the current optimization period). The real-time telemetric information reduces uncertainty in the optimization model.

Each site management system 440 may manage infrastructure assets, including flexible loads 350, and staff within one or more power infrastructure sites 140. After solving the optimization model, optimizer 410 may output site information to each site management system 440. For example, this site information may comprise a ranked list of flexible loads 350, ordered, for instance, from the flexible load 350 that can be unplugged the longest amount of time to the flexible load 350 that can be unplugged the shortest amount of time. Such information may be used by site management system 440, for instance, to determine which flexible loads 350 can be serviced and/or the like. Additionally or alternatively, this site information may comprise an assignment or mapping of flexible loads 350 to charging stations 340. Such a mapping can be used to automatically route flexible loads 350 to their mapped charging stations 340, for example, by transmitting routing instructions, such as the location of the mapped charging station 340, to a navigation system within each flexible load 350.

Each control system 142 may provide independent control of a power infrastructure site 140. After solving the optimization model, optimizer 410 may output control information, associated with control of a power infrastructure site 140, to the control system 142 associated with that power infrastructure site 140. Such control information may be provided to the control system 142 of each power infrastructure site 140 that is managed by optimizer 410. The control information may comprise one or more control instructions that trigger one or more control operations at control system 142 and/or other information that is used during one or more control operations at control system 142. A control instruction may include, without limitation, an instruction to control a setpoint associated with a physical component of power infrastructure site 140 (e.g., a power flow rate associated with a charging station 340), an instruction to charge a flexible load 350, an instruction to discharge a flexible load 350, an instruction to perform pre-conditioning of a flexible load 350 (e.g., cooling of a cabin and/or battery of an electric vehicle, heating of a cabin of an electric vehicle, etc.), and/or the like. Other information may include, without limitation, a ranked list of charging stations 340 (e.g., ordered from charging stations 340 with the most capacity to charging stations 340 with the least capacity), a charging schedule for flexible loads 350, assignments or mappings of flexible loads 350 to charging stations 340, and/or the like.

Optimizer 410 may also receive data from each control system 142. For example, control system 142 may report events detected within the respective power infrastructure site 140 (e.g., a charger 342 of a charging station 340 being plugged into a flexible load 350), a state of charge detected for a plugged-in flexible load 350, an actual power flow or power flow rate between a charging station 340 and connected flexible load 350, and/or the like. These data may be received periodically by optimizer 410, and used as input to the optimization model for the current optimization period.

Electricity market interface 152 may provide an interface to an electricity market 150 in which the utility that operates grid 310 is a participant. In particular, electricity market 150 may enable an operator of a power infrastructure site 140 to purchase electricity from a utility or other energy provider (e.g., operating grid 310), sell electricity to an energy provider (e.g., operating grid 310), obtain service commitments from an energy provider, provide service commitments to an energy provider, and/or the like. Optimizer 410 may receive pricing information from electricity market interface 152. For example, this pricing information may comprise a forecast of the price for electricity from grid 310 in one or more future time periods (e.g., including the optimization period), uncertainty parameter(s) for the price forecast, applicable electricity tariffs, and/or the like. Optimizer 410 may incorporate this pricing information into the input to the optimization model. For example, the target value that is output by the optimization model may include an energy cost that is derived from the pricing information, in which case optimizing the target value may comprise minimizing the target value, and thereby the energy cost.

Optimizer 410 may receive a forecast of DER power generation from electricity market interface 152. Alternatively, optimizer 410 may receive a weather forecast from electricity market interface 152 or other external system (e.g., weather forecast service), and derive its own forecast of DER power generation. It should be understood that the power generated by renewable energy resources, such as solar power generators and wind power generators, may change significantly depending on the weather. Optimizer 410 may incorporate the forecast of DER power generation into the input to the optimization model, for example, to determine how much DER power generation will be available to power infrastructure site(s) 140 during the current optimization period.

Optimizer 410 may obtain service commitments from electricity market 150 via electricity market interface 152. For example, optimizer 410 may determine an energy demand required in the optimization period based on the solution

11

to the optimization model (e.g., comprising the values for one or more variables in the optimization model that optimize the target value output by the optimization model). Optimizer 410 may transmit a request, for a service commitment for the determined energy demand in the respective optimization period from electricity market 150, to electricity market interface 152. In response, optimizer 410 may receive the requested service commitment for the energy demand in the respective optimization period from an energy provider via electricity market interface 152. If no energy provider on electricity market 150 will commit to the service, optimizer 410 may update and re-run the optimization model (e.g., with a constraint on the energy demand), and/or initiate or perform some other remedial action.

Optimizer 410 may obtain other services from electricity market 150 via electricity market interface 152. For example, optimizer 410 may receive service pricing for one or more services, offered by an energy provider on electricity market 150, from electricity market interface 152. Optimizer 410 may incorporate this service pricing into the input to the optimization model. Based on the solution to the optimization model, optimizer 410 may determine to purchase one or more services, and request a service commitment for the service(s) from electricity market 150 via electricity market interface 152. In response, optimizer 410 may receive the requested service commitment for the service(s) from electricity market interface 152. If no energy provider on electricity market 150 will commit to the service, optimizer 410 may update the input to the optimization model to exclude the service pricing and re-run the optimization model, and/or initiate or perform some other remedial action. In an embodiment, optimizer 410 may receive a schedule of requested service commitments via electricity market interface 152.

Optimizer 410 may provide service commitments to electricity market 150 via electricity market interface 152. For example, optimizer 410 may provide flexibility information for one or more power infrastructure site(s) 140 that it manages to electricity market 150 via electricity market interface 152. The flexibility information may comprise a curve of the price per kilowatt (kW) versus flexibility in the power infrastructure site(s) 140. An energy provider on electricity market 150 may purchase flexibility from optimizer 410 via electricity market interface 152. This flexibility can be utilized for curtailment (e.g., demand response) when needed. In an embodiment, optimizer 410 may receive a schedule of provided service commitments via electricity market interface 152.

It should be understood that the illustrated data flow is simply an example. Optimizer 410 may interface with fewer, more, or different sets of systems than those illustrated. Each system may be used to collect data to be incorporated into the input to the optimization model solved by optimizer 410 and/or as a destination for data output by optimizer 410. Additional examples of data that may be collected and used as input to the optimization model include, without limitation, the weather, the status of power infrastructure site(s) 140, financial figures related to power infrastructure site(s) 140, estimates of uncertainty (e.g., for planned schedules for flexible loads 350), and/or the like.

For example, optimizer 410 may interface with a weather forecast service to receive a weather forecast for the optimization period from the weather forecast service. The incorporation of weather forecasts into the optimization model can improve estimates of energy demand. For example, as discussed above, the weather forecast may be used to forecast DER generation, which can be incorporated into the input to the optimization model. Additionally or alternatively, optimizer 410 may utilize the weather forecast with a model of pre-conditioning to more accurately estimate the energy demand for pre-conditioning flexible loads 350. For instance, during relatively hot or cold time periods, more energy may be required to pre-condition (e.g., cool or heat) electric vehicles, than during temperate time periods.

It should be understood that the above examples are not limiting. Optimizer 410 may utilize other inputs and/or produce other outputs than those specifically described herein. Optimizer 410 may utilize a modular "building block" architecture, such that new inputs can be easily incorporated into the optimization model and/or existing inputs can be easily removed from the optimization model. Some of these inputs may represent solutions output by other optimization systems. In addition, as discussed in various examples, optimizer 410 may provide additional outputs (e.g., ranked lists) that describe capacity constraints of EV supply equipment (EVSE), such as charging stations 340. These additional outputs may be used by other systems (e.g., scheduling system 420, site management system 440, etc.), so that optimizer 410 does not have to integrate every detail of optimization.

5. Process Overview

Embodiments of processes for charging control in a power infrastructure site using a heuristic approach to extend battery life, will now be described in detail. It should be understood that the described processes may be embodied in one or more software modules that are executed by one or more hardware processors, for example, as software 112 executed by processor(s) 210 of EMS 110. The described processes may be implemented as instructions represented in source code, object code, and/or machine code. These instructions may be executed directly by hardware processor(s) 210, or alternatively, may be executed by a virtual machine or container operating between the object code and hardware processors 210. In addition, the disclosed software may be built upon or interfaced with one or more existing systems.

Alternatively, the described processes may be implemented as a hardware component (e.g., general-purpose processor, integrated circuit (IC), application-specific integrated circuit (ASIC), digital signal processor (DSP), field-programmable gate array (FPGA) or other programmable logic device, discrete gate or transistor logic, etc.), combination of hardware components, or combination of hardware and software components. To clearly illustrate the interchangeability of hardware and software, various illustrative components, blocks, modules, circuits, and steps are described herein generally in terms of their functionality. Whether such functionality is implemented as hardware or software depends upon the particular application and design constraints imposed on the overall system. Skilled persons can implement the described functionality in varying ways for each particular application, but such implementation decisions should not be interpreted as causing a departure from the scope of the invention. In addition, the grouping of functions within a component, block, module, circuit, or step is for ease of description. Specific functions or steps can be moved from one component, block, module, circuit, or step to another without departing from the invention.

Battery wear can be modeled using an empirical model that superimposes two degradation phenomena: (i) cycle aging; and (ii) calendar aging. Cycle aging is a function of depth of discharge (DoD), temperature, and charging-discharging rates. In EV applications, cycle aging can be caused by motor peak loads and urgent fast charging. From the perspective of an EMS 110 managing a power infrastructure site 140 that is an EV depot, depth of discharge and temperature are not controllable parameters, since they primarily depend on the strategy of the EV fleet's operator, the driving style of EV drivers, and the electric vehicles' battery management systems, which generally do not expose such data.

On the other hand, calendar aging is a function of time and average state of charge. For example, calendar aging increases when a battery is near a full state of charge or at a low state of charge. A lithium-ion battery that remains empty for a long time will lose capacity, and a lithium-ion battery that remain full for a long time, especially in high temperatures, will degrade and wear out faster. The time that a battery spends in these extreme SoC ranges can be managed by EMS 110. In particular, EMS 110 may optimize the operation of power infrastructure site 140 so as to penalize extreme SoC values in the optimization model. Thus, embodiments control the states of charge in the batteries of flexible loads to reduce the calendar aging of the batteries.

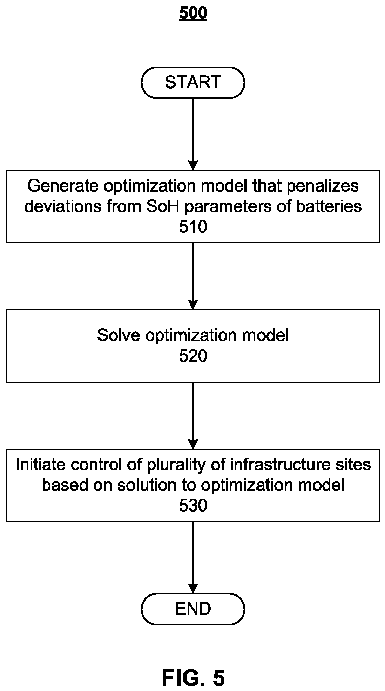

FIG. 5 illustrates an example process 500 for charging control in a power infrastructure site using a heuristic approach to extend battery life, according to an embodiment. Process 500 may be implemented by optimizer 410. While process 500 is illustrated with a certain arrangement and ordering of subprocesses, process 500 may be implemented with fewer, more, or different subprocesses and a different arrangement and/or ordering of subprocesses. In addition, it should be understood that any subprocess, which does not depend on the completion of another subprocess, may be executed before, after, or in parallel with that other independent subprocess, even if the subprocesses are described or illustrated in a particular order.

In subprocess 510, an optimization model is generated from a model of one or more power infrastructure sites 140. For example, a model of each power infrastructure site 140 that is managed by optimizer 410 may be stored in a data structure in memory (e.g., database(s) 114). Subprocess 510 may generate an optimization model that utilizes a model of a single power infrastructure site 140 to optimize operation of the single power infrastructure site 140, or a model of a plurality of power infrastructure sites 140 to optimize operation across the plurality of power infrastructure sites 140. In an embodiment, the optimization model outputs a target value based on one or more variables and an input that comprises a schedule for flexible loads 350 in the power infrastructure site(s) 140 represented by the model of power infrastructure site(s) 140.

A variable may represent a controllable parameter within the plurality of power infrastructure sites 140. Examples of a controllable parameter include, without limitation, a setpoint of a physical component (e.g., a non-intermittent distributed energy resource), a power flow rate at which to charge or discharge a flexible load 350, a state of charge to which to charge a flexible load 350 or battery energy storage system 320, a time at which to start charging or discharging a flexible load 350, a time at which to terminate charging or discharging of a flexible load 350, a time duration for charging or discharging a flexible load 350, an assignment or mapping of a flexible load 350 to a charging station 340 or power infrastructure site 140, or the like. Generally, the optimization model will include a plurality of variables, including a mix of different types of controllable parameters. In an embodiment, the variable(s) in the optimization model at least include the states of charge of energy stores (e.g., batteries) of flexible loads 350 in the modeled power infrastructure site(s) 140.

The schedule for flexible loads 350 may comprise a scheduled arrival time for each flexible load 350, a scheduled departure time for each flexible load 350, route information for each flexible load 350, a state of charge required for each flexible load at the scheduled departure time, and/or the like. The schedule for flexible loads 350 may be represented in the optimization model as constraints (e.g., inequality or equality constraints), or in some other suitable manner. It should be understood that the input to the optimization model may also incorporate other information, such as a forecast of energy pricing, a weather forecast, a forecast of DER generation, and/or the like.

In an embodiment, the optimization model penalizes states of health (e.g., defined by states of charge) that deviate from one or more SoH parameters associated with the energy stores of flexible loads 350. It should be understood that "penalization" in this context refers to any manner of increasing the overall target value output by the optimization model. Mathematically, the optimization model may be expressed as:

$$min_{x}(f(x) + h(x))$$

wherein $x$ comprises values for all of the variable(s), $f(x)$ is a primary objective function that calculates the target value that is estimated to be produced by operation of power infrastructure site(s) 140 using $x$ as the values of the variables of operation, and $h(x)$ is an SoH objective function that increases the target value as a deviation from one or more SoH parameters associated with the batteries of flexible loads 350 increases. Primary objective function $f(x)$ represents the model of power infrastructure site(s) 140, whereas SoH objective function $h(x)$ represents a model of battery wear.

In an embodiment in which the target value includes an energy cost, primary objective function $f(x)$ accounts for the energy price(s) during the optimization period when calculating the target value. For example, primary objective function $f(x)$ may determine a power demand profile produced by values $x$, and use the energy price(s) with the power demand profile (e.g., calculate a product of the power demand profile and the energy price(s)) to determine the target value as its output. Primary objective function $f(x)$ may also account for other costs that are associated with operation of power infrastructure site(s) 140 during the optimization period, such as grid fees, the cost of network services, indirect capital costs, and/or the like.

SoH objective function $h(x)$ may transform deviations from SoH parameter(s) into the same units as the target value output by primary objective function $f(x)$. Thus, in an embodiment in which the target value includes an energy cost, SoH objective function $h(x)$ may convert deviations from SoH parameter(s) into a monetary value, representing the cost of such deviations (e.g., loss in value of flexible loads 350 resulting from the battery wear).

The SoH parameter(s) are primarily described herein as related to the state of charge of a battery. The term "state of charge" refers to a level of charge in a battery relative to the capacity of the battery. However, the SoH parameter(s) may comprise or consist of other attributes related to the health of a battery, such as one or more temperatures in the battery (e.g., temperature of each individual battery cell), the rate of power flow into and/or out of the battery, power loading, battery voltage, and/or the like.

In an embodiment, the SoH parameters may comprise an ideal minimum state of charge $SoC_{idealMin}$ and an ideal maximum state of charge $SoC_{idealMax}$, which define an ideal SoC range. In this case, the deviation of a particular flexible load 350 from the SoH parameters may be defined as a difference between the state of charge of that flexible lead 350 and the ideal SoC range. As one non-limiting example, in the case of lithium-ion batteries, the ideal minimum state of charge $SoC_{idealMin}$ may be 20%-30% of a full charge and the ideal maximum state of charge $SoC_{idealMax}$ may be 70%-80% of the full charge.

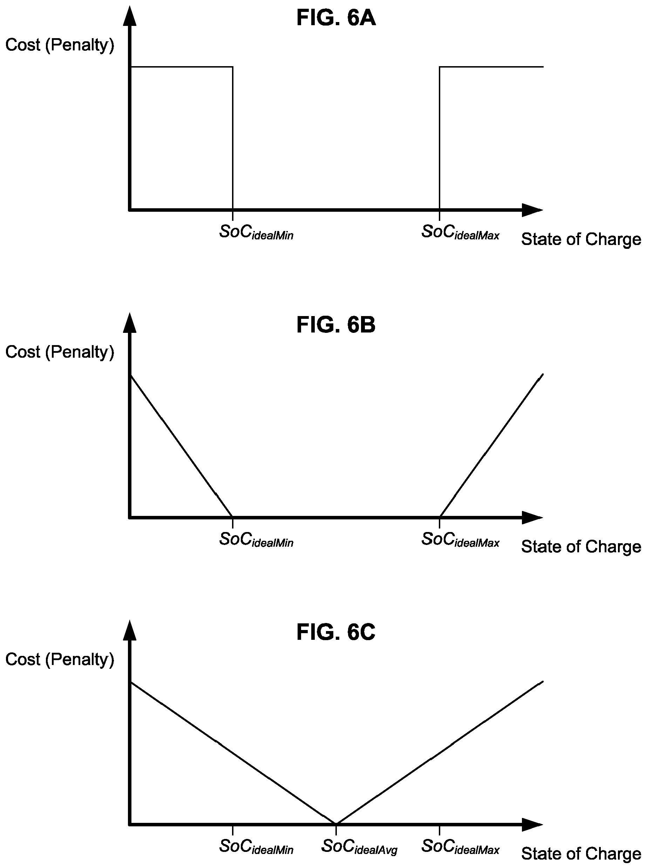

FIGS. 6A and 6B illustrate two example penalty profiles for deviations from an ideal SoC range, according to alternative embodiments. In FIG. 6A, the cost, representing the penalty, is zero when the state of charge of a battery is within the ideal SoC range, and jumps to a fixed value whenever the state of charge of the battery is outside of the SoC range. In FIG. 6B, the cost is zero when the state of charge of a battery is within the ideal SoC range, and then increases linearly as the state of charge decreases below the ideal minimum state of charge $SoC_{idealMin}$ and increases linearly as the state of charge increases above the ideal maximum state of charge $SoC_{idealMax}$. In other words, the cost is proportional to the amount of deviation of the battery's state of charge from the ideal SoC range. It should be understood that these are simply two examples, and that the penalty could have many alternative profiles with respect to the ideal SoC range. For example, the cost could increase non-linearly (e.g., exponentially) as the state of charge decreases below the ideal minimum state of charge $SoC_{idealMin}$ and/or increase non-linearly (e.g., exponentially) as the state of charge increases above the ideal maximum state of charge $SoC_{idealMax}$.

In an alternative embodiment, the SoH parameter may comprise or consist of a single state of charge, such as an average state of charge $SoC_{idealAvg}$ of the ideal SoC range or other ideal state of charge. In this case, the deviation of a particular flexible load 350 from the SoH parameter may be defined as a difference between the state of charge of that flexible lead 350 and the single state of charge (e.g., $SoC_{idealAvg}$). As one non-limiting example, the single ideal state of charge may be 50% of a full charge.

FIG. 6C illustrates an example penalty profile for deviations from an average ideal state of charge $SoC_{idealAvg}$, according to an embodiment. In this example, the cost is zero when the state of charge of a battery is at the average ideal state of charge $SoC_{idealAvg}$, and then increases linearly as the distance, between the state of charge of the battery and the average ideal state of charge $SoC_{idealAvg}$, increases. In other words, the penalty is proportional to the amount of deviation of the battery's state of charge from the ideal state of charge. It should be understood that this is simply one example, and that the penalty could have many alternative profiles with respect to an ideal state of charge (e.g., $SoC_{idealAvg}$). For example, the penalty profile may be an upward parabola centered at the ideal state of charge (e.g., $SoC_{idealAvg}$).

It should be understood that the penalty profile may have many other shapes than those specifically described herein. For example, the illustrated penalty profiles are all symmetric (e.g., constant or increasing at the same rate on either side of the SoH parameter). In this case, the penalty profile could be represented as a single cost factor applied to the absolute deviation between the battery's state of charge and the ideal state of charge or the ideal SoC range.

However, the penalty profile could be asymmetric (e.g., increasing at different rates on either side of the SoH parameter). In this case, the penalty profile could be represented as two cost factors: one cost factor for negative deviations; and one cost factor for positive deviations. In general, the penalty profile may assign a higher cost to at least one state of charge that is further from an ideal state of charge or ideal SoC range than the cost assigned to a state of charge that is nearer to an ideal state of charge or ideal SoC range.

In an embodiment, each flexible load 350 or energy store may be associated with a different set of one or more SoH parameters (e.g., a different ideal SoC range, a different $SoC_{idealMin}$, a different $SoC_{idealMax}$, and/or a different $SoC_{idealAvg}$). For example, at least one of the energy stores of flexible loads 350 may be associated with a different SoH parameter than a different one of the energy stores of flexible loads 350, or each of the energy stores of flexible loads 350 may be associated with an energy-store-specific SoH parameter that is independent from the SoH parameter associated with others of the energy stores of flexible loads 350. As another alternative, one or more types of energy store, and potentially each type of energy store, may be associated with a different set of one or more SoH parameters. For example, at least one type of the energy stores of flexible loads 350 may be associated with a different SoH parameter than a different type of the energy stores of flexible loads 350. In other words, the SoH parameters may be load-specific and/or energy-store-specific.

In an embodiment that uses an ideal SoC range as the SoH parameter, SoH objective function $h(x)$ may be defined, in one example, as:

$$h(x) = C_{idealMin} + C_{idealMax}$$

$$C_{idealMin} = \sum_{v,t}^{V,T} |SoC_{idealMin} - SoC^{v,t}| \, c_{idealMin}^{v,t}, \qquad \forall SoC^{v,t} < SoC_{idealMin}$$

$$C_{idealMin} = \sum_{v,t}^{V,T} |SoC^{v,t} - SoC_{idealMax}| \, c_{idealMax}^{v,t}, \qquad \forall SoC^{v,t} > SoC_{idealMax}$$

wherein each $v$ from 1 to V represents a different flexible load 350, $SoC^{v,t}$ represents the state of charge of flexible load $v$ at time step $t$, $c_{idealMin}^{v,t}$ represents the cost factor for deviation from the ideal SoC range below the ideal SoC range for flexible load $v$ at time step $t$, and $c_{idealMax}^{v,t}$ represents the cost factor for deviation from the ideal SoC range above the ideal SoC range for flexible load $v$ at time step $t$. It should be understood that, if $c_{idealMin}^{v,t} \neq c_{idealMax}^{v,t}$, then the penalty profile will be asymmetric, and, if $c_{idealMin}^{v,t} = c_{idealMax}^{v,t}$, then the penalty profile will be symmetric. The values of $c_{idealMin}^{v,t}$ and/or $c_{idealMax}^{v,t}$ may be constant for every flexible load $v$ and every time step $t$, specific to each flexible load $v$ and each time step $t$ (i.e., battery-varying and time-varying), specific to each flexible load $v$ but not each time step $t$ (i.e., battery-varying, but not time-varying), or specific to each time step $t$ but not each flexible load $v$ (time-varying, but not battery-varying). The SoH objective function $h(x)$ in this embodiment, only adds three to four linear parameters per battery or flexible load 350.

In an embodiment that uses a single ideal state of charge as the SoH parameter, SoH objective function $h(x)$ may be defined, in one example, as:

$$h(x) = \sum_{v,t}^{V,T} |SoC^{v,t} - SoC_{ideal}| \, c^{v,t}$$

wherein $SoC_{ideal}$ is the ideal state of charge, and $c^{v,t}$ represents the cost factor for deviation from $SoC_{ideal}$. The value of $c^{v,t}$ may be constant for every flexible load $v$ and every time step $t$, specific to each flexible load $v$ and each time step $t$ (i.e., battery-varying and time-varying), specific to each flexible load $v$ but not each time step $t$ (i.e., battery-varying, but not time-varying), or specific to each time step $t$ but not each flexible load $v$ (time-varying, but not battery-varying). The SoH objective function $h(x)$ in this embodiment, only adds two linear parameters per battery or flexible load 350.

In an alternative embodiment, SoH objective function $h(x)$ may be defined using other SoH parameters. For example, the SoH parameters may comprise a vector of pairings of states of charge with associated cost factors that define the penalty profile. In this case, a cost factor may be interpolated for states of charge that are not explicitly included in the vector (e.g., using the cost factors of the two closest explicitly included states of charge on either side of the stage of charge to be interpolated). In alternative embodiments, the deviation and/or cost factor may be determined in more complex manners and/or as a function of any other parameters. In an embodiment, the cost factor may be relatively higher for batteries that are more affected by extreme states of charge, such that these batteries are prioritized for corrective control over batteries that are less affected by extreme states of charge. Similarly, the cost factor may be adjusted according to weather forecasts, so as to increase (e.g., at least for batteries that are vulnerable to heat) during optimization periods that are forecast to be hotter relative to optimization periods that are forecast to be temperate or cooler, since batteries may be subject to greater degradation under high temperatures.

In the above examples, SoH objective function $h(x)$ is formulated as a piecewise penalty (e.g., as a cost) that is added over every time step to primary objective function $f(x)$, and which enables SoH parameter(s) (e.g., $SoC_{idealMin}$ and $SoC_{idealMax}$, or $SoC_{ideal}$) and/or cost factor(s) (e.g., $c_{idealMin}$ and $c_{idealMax}$, or $c$) to be separately and distinctly defined for each flexible load 350 or battery. This enables flexibility in terms of how penalties are applied to reduce battery wear in flexible loads 350. However, it should be understood that these are simply examples, and that the penalty profile may be defined in any suitable manner, including in a less flexible manner.

Primary objective function $f(x)$ may account for the input, comprising the schedule for flexible loads 350 and/or other information (e.g., weather forecast, forecast of DER generation, etc.). Alternatively, the input may be converted into constraints. In this case, the optimization model is solved subject to the constraints, which may be expressed as:

$$\min_{x}(f(x) + h(x))$$

subject to

$$ec_i(x) = 0, i = 1, \ldots, n_{ec}$$

$$ic_j(x) \leq 0, j = 1, \ldots, n_{ic}$$

wherein $ec$ represents an equality constraint, $n_{ec}$ represents the number of equality constraints, $ic$ represents an inequality constraint, and $n_{ic}$ represents the number of inequality constraints. A solution to the optimization model may comprise values $x$ that minimize the target value output as the sum of primary objective function $f(x)$ and SoH objective function $h(x)$, while satisfying all of the constraints (e.g., within a tolerance). In an embodiment, at least some of the constraints may be probabilistic constraints, as opposed to hard constraints. In addition, at least some of the constraints may restrict parameters associated with flexible loads 350 (e.g., parameters associated with electric vehicles).

Primary objective function $f(x)$ for the virtual site model and SoH objective function $h(x)$ for penalizing values $x$ that increase battery wear may be constructed in any suitable manner. For example, feature engineering or other techniques may be used to evaluate potential parameters (variables, constraints or boundary conditions, weights, etc.), and select the most influential parameters for the optimization model. A user may routinely interact with optimizer 410 (e.g., via a graphical user interface generated by software 112), for example, to revise primary objective function $f(x)$ and/or and SoH objective function $h(x)$, such as changing one or more parameters in the optimization model. A machine-learning algorithm may learn from these interactions, for example, to tune parameters or defaults in the optimization model based on these routine user interactions.

Primary objective function $f(x)$ and/or SoH objective function $h(x)$ may comprise mixed-integer programming, linear programming, quadratic programming, mixed-integer linear programming (MILP), mixed-integer quadratic programming (MIQP), and/or the like. In general, the use of linear programming may improve computational speed and scalability of the optimization model, which can be especially advantageous when primary objective function $f(x)$ and/or SoH objective function $h(x)$ comprise a large number of variables or other parameters (e.g., for a large number of flexible loads 350). There are numerous commercial and open-source modeling languages available to define objective function $f(x)$ and SoH objective function $h(x)$.

Objective function $f(x)$ and/or SoH objective function $h(x)$ may be trained in any known manner. For example, objective function $f(x)$ may be trained using supervised machine learning. In this case, a training dataset of $(X, Y)$, in which $X$ represents a set of historical values for the variable(s) and Y represents ground-truth target values for those historical values for the variable(s), may be used. In this case, the training may be expressed as:

$$min(Y - f(X))$$

wherein f (X) (e.g., the weights in f (X)) is updated to minimize the error between the ground-truth target values $Y$ and the corresponding target values output by f (X). Alternatively, objective function $f(x)$ may be trained in other manners using historical data. SoH objective function $h(x)$ may be trained in an identical, similar, or different manner as primary objective function f (X) and/or together with primary objective function f (X).

In an embodiment, the optimization model may comprise a plurality of objective functions, including three or more objective functions:

$$\min_x \left( f(x) + h(x) + \sum_1^K g_k(x) \right)$$

subject to zero, one, or a plurality of constraints. Each $g(x)$ represents a secondary objective function, in addition to the primary objective function $f(x)$ and SoH objective function $h(x)$. There may be $K \geq 1$ secondary objective functions $g(x)$. Each secondary objective function $g(x)$ may output a target value, based on $x$, in the same unit of measure (e.g., monetary cost) as the target value output by primary objective function $f(x)$ and SoH objective function $h(x)$. It should be understood that, when the optimization model is solved, the total target value, as the sum of the target value output by primary objective function $f(x)$, SoH objective function $h(x)$, and each secondary objective function $g(x)$, is minimized. As with SoH objective function $h(x)$, a secondary objective function $g(x)$ may be a penalty function that penalizes certain attributes of values $x$, to thereby bias the optimization model away from solutions with values $x$ that have those attributes.

While the optimization model has been expressed herein as a minimization problem, it should be understood that the optimization model could instead be expressed herein as a maximization problem:

$$\max_x \big( f(x) + h(x) \big)$$

or

$$\max_x \left( f(x) + h(x) + \sum_1^K g_k(x) \right)$$

subject to zero, one, or a plurality of constraints. However, in order to simplify the description, it will generally be assumed herein that the optimization model is cast as a minimization problem. A person of skill in the art will understand how to convert between a minimization and maximization problem, and which problem may be more appropriate in a given circumstance.

In subprocess 520, the optimization model is solved to determine values for the one or more variables that optimize the target value. In other words, the optimization model is evaluated to determine values $x$ that optimize (e.g., minimizes) the target value output by the optimization model. Solving the optimization model may comprise iteratively executing the optimization model using a different set of values $x$ in each iteration until the target value converges. After each iteration, values $x$ for the next iteration may be determined using any known technique (e.g., gradient descent). The target value may be determined to converge when it is within a tolerance from a specific value, when the rate of improvement to the target value over prior iterations satisfies a threshold (e.g., the rate of decrease in the target value falls below a threshold in a minimization problem), and/or when one or more other criteria are satisfied. Once the target value has converged, values $x$ that produced the final target value may be output as the solution to the optimization model. These values $x$ may represent an operating configuration for the power infrastructure site(s) 140.

It should be understood that the optimization model is biased by SoH objective function $h(x)$ against states that may increase battery wear (e.g., a state of charge outside an ideal SoC range). In an embodiment, SoH objective function

$h(x)$ may account for weather, such that penalties, at least for batteries that are vulnerable to greater degradation in high temperatures, are increased during optimization periods with hot weather, relative to optimization periods with temperate or cool weather. As a result, during optimization periods with high temperatures, the bias against extreme states of charge (e.g., above the ideal SoC range) in optimization model may increase, so that fewer batteries in power infrastructure site(s) 140 reach extreme states of charge. For example, the increase in bias may be implemented by increasing the cost factor (e.g., increasing the value of each $c_{idealMax}$ associated with a vulnerable battery), lowering the value of $SoC_{idealMax}$, lowering the value of $SoC_{ideal}$, and/or the like.

The optimization model may be a stochastic optimization model that is robust to uncertainties. The optimization model may be solved in subprocess 520 using any suitable technique. Such techniques include, without limitation, stochastic multi-stage optimization, chance-constrained optimization, Markowitz mean-variance optimization, and/or the like. There are numerous commercial and open-source solvers available to solve the optimization model in subprocess 520.

In an embodiment, a plurality of optimization models, each comprising a different primary objective function $f(x)$, could be solved. Each primary objective function $f(x)$ may represent a different scenario. Such an embodiment may be used to evaluate a plurality of different "what-if" scenarios. Alternatively or additionally, each primary objective function $f(x)$ may represent a different objective. A final solution may be determined from the solutions output by the plurality of optimization models by selecting one of the solutions, combining the solutions in any suitable manner, or the like.

In subprocess 530, control of the power infrastructure site(s) 140, for which optimization was performed in subprocess 520, may be initiated based on the solution to the optimization model. The control may comprise configuring one or more physical components in the power infrastructure site(s) 140 based on the determined values $x$, representing an operating configuration. These physical components may comprise physical infrastructure assets, such as battery energy storage system(s) 320, power generator(s) 330, charging station(s) 340, charger(s) 342, flexible load(s) 350, auxiliary load(s), and/or the like.

As mentioned above, the solution to the optimization model comprises the values for the one or more variables (i.e., $x$) that optimized the target value in subprocess 520. Values $x$ may represent operating configurations for the power infrastructure site(s) 140. For example, values $x$ may comprise, for each flexible load 350, a future charging pattern (e.g., power flow rate, charging time period, etc.) that charges flexible load 350 to a target state of charge by a scheduled time. As a result of SoH objective function $h(x)$, the future charging pattern may eliminate or minimize the time that the battery of flexible load 350 has an extreme state of charge (i.e., outside the ideal SoC range), to thereby reduce battery wear and increase the life of the battery and service life of flexible load 350.

In the case that flexible load 350 is an electric vehicle, the scheduled time may be a departure time, and the target state of charge may be a state of charge required for the electric vehicle to complete its scheduled route. The charging may also include or otherwise account for pre-conditioning of the electric vehicle (e.g., cooling an electric vehicle before its departure, pre-conditioning the battery of an electric vehicle, etc.), as well as charging the battery of the electric vehicle. However, pre-conditioning may be a flexible operating state that can be terminated or foregone, when necessary to charge an electric vehicle by its scheduled departure time, or when optimizer 410 determines that the power can be better used elsewhere.

Subprocess 530 may comprise optimizer 410 generating and transmitting control information to one or more control systems 142. Each control system 142 may then control physical component(s) in its respective power infrastructure site 140. Alternatively, optimizer 410 could control the physical component(s) directly (i.e., without an intervening control system). In either case, the control may comprise setting a setpoint of a physical component, actuating a switch, turning a physical component on or off or otherwise changing a physical or operating state of a physical component, and/or the like. A setpoint of a physical component may comprise a value of voltage, current, output power, input power, power flow rate, state of charge, temperature, or the like. For example, the control may comprise controlling the setpoint(s) (e.g., output power) of non-intermittent distributed energy resources. It should be understood that, while intermittent distributed energy resources (e.g., solar or wind power generators or other generators that depend on weather) could be controlled in a similar manner, intermittent distributed energy resources can typically only be controlled to curtail output power to less than their potential output power, which essentially wastes energy.

In an embodiment, process 500 may be performed periodically to determine values $x$, representing the operating configuration of the power infrastructure site(s) 140, in a sliding time window, and initiate control of the power infrastructure site(s) 140 to conform to those operating configurations within the optimization period represented by the sliding time window. The sliding time window may slide according to a time step (i.e., an expiration of a time interval), and process 500 may be executed for the optimization period, currently represented by the sliding time window, after each time step. For example, the time step could be one minute, five minutes, ten minutes, fifteen minutes, thirty minutes, one hour, one day, or any other time interval. The sliding time window may start with the current time and end in the future, or may start in the future and end further in the future. In the former case, process 500 is executed at the start of each optimization period, whereas, in the latter case, process 500 is executed in advance of each optimization period (e.g., one minute, five minutes, ten minutes, fifteen minutes, thirty minutes, one hour, one day, etc., in advance). The periodic execution of process 500 may be performed automatically after each time step (i.e., without user intervention) or semi-automatically (e.g., with user confirmation) after each time step. In either case, once execution of process 500 is initiated, each subprocess of process 500 may be executed automatically.

In an alternative or additional embodiment, process 500 may be executed in response to a triggering event, other than a time step. For example, process 500 may be executed in response to a user operation. In particular, a user may utilize one or more inputs of a graphical user interface, provided by software 112, to execute optimizer 410. In this case, the initiation of control in subprocess 530 may be performed automatically, semi-automatically, or manually. In the semi-automatic case, the graphical user interface may display the operating configuration, output by subprocess 520, to the user and request confirmation from the user prior to optimizer 410 executing subprocess 530. In the manual case, the graphical user interface may provide the operating configuration, output by subprocess 520, to a user, and the user may manually configure the power infrastructure site(s) 140.

6. Example Embodiments

Disclosed embodiments incorporate heuristic penalty factors for battery aging into an optimization model for controlling operation (e.g., power and time schedules for flexible loads 350) of power infrastructure site(s) 140. The heuristic penalty factors may be utilized, for example, in an SoH objective function $h(x)$ in the optimization model that can be constrained and/or weighted against other optimization objectives (e.g., time, power level, etc.) to achieve a desired balance between objectives. The heuristic penalty factors may be formulated as a linear function that is generalizable, scalable, fast, and computationally tractable.

In the context of electric vehicles, the use of the heuristic penalty factors can benefit charging control of commercial EV fleets by reducing the effects of charging schedules on battery aging within the electric vehicles. Similar issues exist for stationary batteries in microgrids (e.g., battery energy storage systems 320). In addition to extending the lifetime of batteries, disclosed embodiments are simple to configure and maintain, do not require complex systems integration with battery management systems in flexible loads 350, and can be applied across a range of battery chemistries, flexible loads 350, charging protocols, and the like.

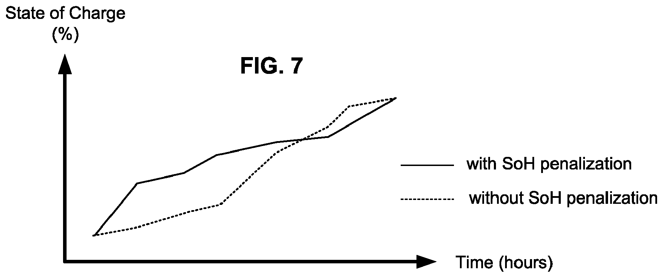

FIG. 7 illustrates the impact of an SoH objective function $h(x)$ that penalizes states of charge outside of ideal SoC ranges, according to an experiment with an embodiment. The impact is conveyed in the line graph as a state of charge over time for a battery. As demonstrated by the graph, the battery spent less time in extreme states of charge when SoH penalization was used during optimization than when SoH penalization was not used during optimization. Conversely, when SoH penalization was not used during optimization, the battery spent more time in extreme states of charge (i.e., nearer to empty and full states of charge), which can increase battery wear and reduce the lifetime of the battery.

In general, the optimization model will be biased by the SoH penalization to bring (e.g., charge or discharge) and maintain flexible loads 350 (e.g., electric vehicles) within the ideal SoC range. This can reduce calendar aging by charging empty batteries early and only charging batteries to full when necessary (e.g., to maintain the schedule of flexible loads 350). By appropriately setting the cost factors, the optimization model can be configured to not override higher priority short-term objectives (e.g., preparing batteries of electric vehicles to be ready for departure and with sufficient state of charge to complete an assigned route).

The SoH parameters used by the SoH penalization (e.g., incorporated into SoH objective function $h(x)$) can be defined at various levels of granularity. For example, the SoH parameters may be defined globally, per power infrastructure site 140, per type of charging station 340 or charger 342, per type of flexible load 350, per flexible load 350, per type of battery, per battery, and/or the like. The selection of values for the SoH parameters can be informed by a variety of sources, including the manufacturer, industry-wide averages, ambient temperature over time, machine learning, stochastic methods, telemetry of flexible loads 350, and/or the like.

The values of SoH parameters may be system settings. Alternative, the SoH parameters may be manually edited by users, for example, via user inputs through a graphical user interface provided by software 112. In this case, the SoH parameters may be initially populated with default values. The user can then edit these default values, including, for example, to turn of the SoH penalization for one or more flexible loads 350, infrastructure sites 140, and/or the like (e.g., by reducing the associated cost factors to zero).

Embodiment 1: A method comprising using at least one hardware processor to: generate an optimization model from a model of at least one power infrastructure site, wherein the optimization model outputs a target value based on one or more variables, including states of charge of energy stores (e.g., batteries) in flexible loads in the at least one power infrastructure site and an input that comprises a schedule for the flexible loads, and wherein the optimization model penalizes states of charge that deviate from state-of-health (SoH) parameters associated with the energy stores (e.g., batteries) of the flexible loads; solve the optimization model to determine values for the one or more variables that optimize the target value; and initiate control of one or more physical components in the at least one power infrastructure site based on the determined values for the one or more variables.

Embodiment 2: The method of Embodiment 1, wherein the at least one power infrastructure site comprises a depot, wherein the flexible loads comprise electric vehicles, and wherein the one or more physical components comprise one or more charging stations configured to electrically connect to the electric vehicles to one or both of charge the electric vehicles or discharge the electric vehicles.

Embodiment 3: The method of Embodiment 2, wherein the determined values for the one or more variables associate each of the electric vehicles with one or both of a time period or power flow rate for charging or discharging at one of the one or more charging stations in the at least one power infrastructure site.

Embodiment 4: The method of either Embodiment 2 or 3, further comprising receiving vehicle information for the electric vehicles from at least one external system via at least one network, wherein the input to the optimization model is derived from at least the vehicle information.

Embodiment 5: The method of Embodiment 4, wherein the vehicle information comprises one or more of planned schedules for the electric vehicles, routes of the electric vehicles, arrival times of the electric vehicles at the at least one power infrastructure site, or states of charge of the electric vehicles.

Embodiment 6: The method of any one of Embodiments 1 through 5, wherein the target value includes at least an energy cost, and wherein optimizing the target value comprises minimizing the target value.

Embodiment 7: The method of any one of Embodiments 1 through 6, wherein initiating control of one or more physical components comprises controlling setpoints of the one or more physical components according to the determined values for the one or more variables.

Embodiment 8: The method of Embodiment 7, wherein the one or more physical components comprise non-intermittent distributed energy resources.

Embodiment 9: The method of any one of Embodiments 1 through 8, wherein initiating control comprises communicating with a control system for the at least one power infrastructure site via at least one network.

Embodiment 10: The method of any one of Embodiments 1 through 9, wherein the SoH parameters comprise state-of-charge (SoC) ranges.

Embodiment 11: The method of Embodiment 10, wherein at least one of the SoC ranges is defined by a minimum SoC threshold that is greater than an empty charge and a maximum SoC threshold that is less than a full charge.

Embodiment 12: The method of any one of Embodiments 1 through 11, wherein the optimization model comprises an objective function in which penalties, to states of charge that deviate from the SoH parameters, increase as the deviations increase.

Embodiment 13: The method of Embodiment 12, wherein the objective function is linear.

Embodiment 14: The method of any one of Embodiments 1 through 13, wherein the optimization model penalizes one or more additional characteristics of charging associated with the energy stores (e.g., batteries) in the flexible loads.

Embodiment 15: The method of any one of Embodiments 1 through 14, wherein at least one of the energy stores (e.g., batteries) in the flexible loads is associated with a different SoH parameter than a different one of the energy stores (e.g., batteries) in the flexible loads.

Embodiment 16: The method of any one of Embodiments 1 through 15, wherein at least one type of the energy stores (e.g., batteries) in the flexible loads is associated with a different SoH parameter than a different type of the energy stores (e.g., batteries) in the flexible loads.

Embodiment 17: The method of any one of Embodiments 1 through 16, wherein each of the energy stores (e.g., batteries) is associated with an energy-store-specific (e.g., battery-specifc) SoH parameter that is independent from the SoH parameter associated with others of the energy stores (e.g., batteries).

Embodiment 18: The method of any one of Embodiments 1 through 17, wherein the optimization model comprises a stochastic algorithm.

Embodiment 19: A system comprising: at least one hardware processor; and software configured to, when executed by the at least one hardware processor, perform the method of any one of Embodiments 1 through 18.

Embodiment 20: A non-transitory computer-readable medium having instructions stored thereon, wherein the instructions, when executed by a processor, cause the processor to perform the method of any one of Embodiments 1 through 18.

The above description of the disclosed embodiments is provided to enable any person skilled in the art to make or use the invention. Various modifications to these embodiments will be readily apparent to those skilled in the art, and the general principles described herein can be applied to other embodiments without departing from the spirit or scope of the invention. Thus, it is to be understood that the description and drawings presented herein represent a presently preferred embodiment of the invention and are therefore representative of the subject matter which is broadly contemplated by the present invention. It is further understood that the scope of the present invention fully encompasses other embodiments that may become obvious to those skilled in the art and that the scope of the present invention is accordingly not limited.

Combinations, described herein, such as "at least one of A, B, or C," "one or more of A, B, or C," "at least one of A, B, and C," "one or more of A, B, and C," and "A, B, C, or any combination thereof' include any combination of A, B, and/or C, and may include multiples of A, multiples of B, or multiples of C. Specifically, combinations such as "at least one of A, B, or C," "one or more of A, B, or C," "at least one of A, B, and C," "one or more of A, B, and C," and "A, B, C, or any combination thereof' may be A only, B only, C only, A and B, A and C, B and C, or A and B and C, and any such combination may contain one or more members of its constituents A, B, and/or C. For example, a combination of A and B may comprise one A and multiple B's, multiple A's and one B, or multiple A's and multiple B's.

**Claims**

1. A method comprising using at least one hardware processor to:

generate an optimization model from a model of at least one power infrastructure site, wherein the optimization model outputs a target value based on one or more variables, including states of charge of energy stores in flexible loads in the at least one power infrastructure site and an input that comprises a schedule for the flexible loads, and wherein the optimization model penalizes states of charge that deviate from state-of-health (SoH) parameters associated with the energy stores in the flexible loads;
solve the optimization model to determine values for the one or more variables that optimize the target value; and
initiate control of one or more physical components in the at least one power infrastructure site based on the determined values for the one or more variables.

2. The method of Claim 1, wherein the at least one power infrastructure site comprises a depot, wherein the flexible loads comprise electric vehicles, and wherein the one or more physical components comprise one or more charging stations configured to electrically connect to the electric vehicles to one or both of charge the electric vehicles or discharge the electric vehicles.

3. The method of Claim 2, wherein the determined values for the one or more variables associate each of the electric vehicles with one or both of a time period or power flow rate for charging or discharging at one of the one or more charging stations in the at least one power infrastructure site.

4. The method of Claim 2, further comprising receiving vehicle information for the electric vehicles from at least one external system via at least one network, wherein the input to the optimization model is derived from at least the vehicle information.

5. The method of Claim 4, wherein the vehicle information comprises one or more of planned schedules for the electric vehicles, routes of the electric vehicles, arrival times of the electric vehicles at the at least one power infrastructure site, or states of charge of the electric vehicles.

6. The method of Claim 1, wherein the target value includes at least an energy cost, and wherein optimizing the target value comprises minimizing the target value.

7. The method of Claim 1, wherein initiating control of one or more physical components comprises controlling setpoints of the one or more physical components according to the determined values for the one or more variables.

8. The method of Claim 7, wherein the one or more physical components comprise non-intermittent distributed energy resources.

9. The method of Claim 1, wherein initiating control comprises communicating with a control system for the at least one power infrastructure site via at least one network.

10. The method of Claim 1, wherein the SoH parameters comprise state-of-charge (SoC) ranges.

11. The method of Claim 10, wherein at least one of the SoC ranges is defined by a minimum SoC threshold that is greater than an empty charge and a maximum SoC threshold that is less than a full charge.

12. The method of Claim 1, wherein the optimization model comprises an objective function in which penalties, to states of charge that deviate from the SoH parameters, increase as the deviations increase.

13. The method of Claim 12, wherein the objective function is linear.

**14.** The method of Claim 1, wherein the optimization model penalizes one or more additional characteristics of charging associated with the energy stores in the flexible loads.

**15.** The method of Claim 1, wherein at least one of the energy stores in the flexible loads is associated with a different SoH parameter than a different one of the energy stores in the flexible loads.

**16.** The method of Claim 1, wherein at least one type of the energy stores in the flexible loads is associated with a different SoH parameter than a different type of the energy stores in the flexible loads.

**17.** The method of Claim 1, wherein each of the energy stores is associated with an energy-store-specific SoH parameter that is independent from the SoH parameter associated with others of the energy stores.

**18.** The method of Claim 1, wherein the optimization model comprises a stochastic algorithm.

**19.** A system comprising:

at least one hardware processor; and
software configured to, when executed by the at least one hardware processor,

generate an optimization model from a model of at least one power infrastructure site, wherein the optimization model outputs a target value based on one or more variables, including states of charge of energy stores in flexible loads in the at least one power infrastructure site and an input that comprises a schedule for the flexible loads, and wherein the optimization model penalizes states of charge that deviate from state-of-health (SoH) parameters associated with the energy stores in the flexible loads,
solve the optimization model to determine values for the one or more variables that optimize the target value, and
initiate control of one or more physical components in the at least one power infrastructure site based on the determined values for the one or more variables.

**20.** A non-transitory computer-readable medium having instructions stored thereon, wherein the instructions, when executed by a processor, cause the processor to:

generate an optimization model from a model of at least one power infrastructure site, wherein the optimization model outputs a target value based on one or more variables, including states of charge of energy stores in flexible loads in the at least one power infrastructure site and an input that comprises a schedule for the flexible loads, and wherein the optimization model penalizes states of charge that deviate from state-of-health (SoH) parameters associated with the energy stores in the flexible loads;
solve the optimization model to determine values for the one or more variables that optimize the target value; and
initiate control of one or more physical components in the at least one power infrastructure site based on the determined values for the one or more variables.

**FIG. 1**

**200**

Processor
210

Secondary
Memory 220

Internal Medium
225

Main Memory
215

Removable
Medium
230

I/O Interface
235

255

Communication
Interface 240

External Medium
245

250

Baseband
260

Radio
265

Antenna
270

Communication Bus
205

**FIG. 2**

**FIG. 3**

FIG. 4

<u>500</u>

```
┌─────────┐
│  START  │
└─────────┘
     │
     ▼
┌──────────────────────────────────────────────┐
│ Generate optimization model that penalizes    │
│ deviations from SoH parameters of batteries    │
│                    510                         │
└──────────────────────────────────────────────┘
     │
     ▼
┌──────────────────────────────────────────────┐
│            Solve optimization model            │
│                    520                         │
└──────────────────────────────────────────────┘
     │
     ▼
┌──────────────────────────────────────────────┐
│ Initiate control of plurality of infrastructure sites │
│     based on solution to optimization model    │
│                    530                         │
└──────────────────────────────────────────────┘
     │
     ▼
┌─────────┐
│   END   │
└─────────┘
```

**FIG. 5**

**FIG. 6A**

Cost (Penalty)

$SoC_{idealMin}$        $SoC_{idealMax}$        State of Charge

**FIG. 6B**

Cost (Penalty)

$SoC_{idealMin}$        $SoC_{idealMax}$        State of Charge

**FIG. 6C**

Cost (Penalty)

$SoC_{idealMin}$    $SoC_{idealAvg}$    $SoC_{idealMax}$        State of Charge

State of Charge
(%)

**FIG. 7**

with SoH penalization

without SoH penalization

Time (hours)

Europäisches
Patentamt

European
Patent Office

Office européen
des brevets

# EUROPEAN SEARCH REPORT

**Application Number**

EP 22 21 4141

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | FR 3 002 377 A1 (SCHNEIDER ELECTRIC IND SAS [FR]) 22 August 2014 (2014-08-22) <br> * claims 1,8 * <br> * figures 1,3-5 * <br> * page 3, line 9 * <br> * page 4, lines 12-15 * <br> * page 5, line 24 – page 10, line 25 * <br> ----- | 1-20 | INV. <br> G06Q10/063 <br> G06Q50/06 <br> G06Q50/30 |
| A | US 2018/086223 A1 (LINDEMANN TODD P [US] ET AL) 29 March 2018 (2018-03-29) <br> * paragraphs [0003], [0004] * <br> ----- | 1-20 | |
| A | US 2011/202192 A1 (KEMPTON WILLETT [US]) 18 August 2011 (2011-08-18) <br> * paragraphs [0082] – [0084] * <br> ----- | 1-20 | |

**TECHNICAL FIELDS SEARCHED (IPC)**

G06Q

The present search report has been drawn up for all claims

| Place of search | Date of completion of the search | Examiner |
|---|---|---|
| Munich | 1 September 2023 | Gabriel, Christiaan |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons
...................................................................
& : member of the same patent family, corresponding
document

EPO FORM 1503 03.82 (P04C01)

## ANNEX TO THE EUROPEAN SEARCH REPORT
## ON EUROPEAN PATENT APPLICATION NO.

EP 22 21 4141

This annex lists the patent family members relating to the patent documents cited in the above-mentioned European search report.
The members are as contained in the European Patent Office EDP file on
The European Patent Office is in no way liable for these particulars which are merely given for the purpose of information.

01-09-2023

| Patent document cited in search report | | Publication date | Patent family member(s) | | Publication date |
|---|---|---|---|---|---|
| FR 3002377 | A1 | 22-08-2014 | EP | 2767431 A1 | 20-08-2014 |
| | | | ES | 2562485 T3 | 04-03-2016 |
| | | | FR | 3002377 A1 | 22-08-2014 |
| US 2018086223 | A1 | 29-03-2018 | CN | 107878218 A | 06-04-2018 |
| | | | DE | 102017122129 A1 | 29-03-2018 |
| | | | US | 2018086223 A1 | 29-03-2018 |
| US 2011202192 | A1 | 18-08-2011 | CN | 102792547 A | 21-11-2012 |
| | | | CN | 102844957 A | 26-12-2012 |
| | | | CN | 102859827 A | 02-01-2013 |
| | | | DK | 2537224 T3 | 21-09-2020 |
| | | | DK | 3826134 T3 | 24-10-2022 |
| | | | EP | 2537224 A1 | 26-12-2012 |
| | | | EP | 2537225 A1 | 26-12-2012 |
| | | | EP | 2537226 A1 | 26-12-2012 |
| | | | EP | 3826134 A1 | 26-05-2021 |
| | | | EP | 4033632 A1 | 27-07-2022 |
| | | | EP | 4106138 A1 | 21-12-2022 |
| | | | ES | 2825709 T3 | 17-05-2021 |
| | | | ES | 2928192 T3 | 16-11-2022 |
| | | | JP | 5905836 B2 | 20-04-2016 |
| | | | JP | 6034198 B2 | 30-11-2016 |
| | | | JP | 2013520942 A | 06-06-2013 |
| | | | JP | 2013520943 A | 06-06-2013 |
| | | | JP | 2013523058 A | 13-06-2013 |
| | | | KR | 20120135509 A | 14-12-2012 |
| | | | KR | 20130006453 A | 16-01-2013 |
| | | | KR | 20130028068 A | 18-03-2013 |
| | | | PL | 2537224 T3 | 19-07-2021 |
| | | | PL | 2537226 T3 | 31-10-2022 |
| | | | PL | 3826134 T3 | 28-11-2022 |
| | | | PT | 2537224 T | 20-10-2020 |
| | | | PT | 2537226 T | 29-03-2022 |
| | | | PT | 3826134 T | 04-10-2022 |
| | | | US | 2011202192 A1 | 18-08-2011 |
| | | | US | 2011202217 A1 | 18-08-2011 |
| | | | US | 2011202418 A1 | 18-08-2011 |
| | | | WO | 2011102855 A1 | 25-08-2011 |
| | | | WO | 2011102856 A1 | 25-08-2011 |
| | | | WO | 2011102857 A1 | 25-08-2011 |

EPO FORM P0459

For more details about this annex : see Official Journal of the European Patent Office, No. 12/82

**EP 4 372 641 A1**

**Patent documents cited in the description**

- EP 3702201 B1
- US 8975866 B2
- US 8762189 B2